(19) Europäisches Patentamt / European Patent Office / Office européen des brevets

(11) **EP 2 334 558 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(21) Anmeldenummer: **09736200.8**

(22) Anmeldetag: **09.10.2009**

(51) Int Cl.:
**B64D 33/04** *(2006.01)*    **B64D 41/00** *(2006.01)*

(86) Internationale Anmeldenummer:
**PCT/EP2009/063206**

(87) Internationale Veröffentlichungsnummer:
**WO 2010/040837 (15.04.2010 Gazette 2010/15)**

(54) **SCHALLDÄMPFER FÜR EIN HILFSTRIEBWERK EINES FLUGZEUGS**

SOUND ABSORBER FOR AN AUXILIARY ENGINE OF AN AIRCRAFT

SILENCIEUX POUR UN GROUPE AUXILIAIRE D'UN AVION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.10.2008 DE 102008051241
10.10.2008 US 195835 P
29.01.2009 DE 102009006579
29.01.2009 US 148328 P**

(43) Veröffentlichungstag der Anmeldung:
**22.06.2011 Patentblatt 2011/25**

(60) Teilanmeldung:
**12181472.7**

(73) Patentinhaber: **Airbus Operations GmbH
21129 Hamburg (DE)**

(72) Erfinder:
• **STAROBINSKI, Rudolf
22301 Hamburg (DE)**
• **SIERCKE, Matthias
22525 Hamburg (DE)**

(74) Vertreter: **Kopf, Korbinian Paul
Maiwald Patentanwalts GmbH
Elisenhof
Elisenstrasse 3
80335 München (DE)**

(56) Entgegenhaltungen:
US-A1- 2002 104 707     US-A1- 2006 043 236
US-A1- 2006 180 388     US-A1- 2008 078 863

**Beschreibung**

BEZUG AUF ZUGEHÖRIGE ANMELDUNGEN

Die vorliegende Anmeldung beansprucht die Priorität der der deutschen Patentanmeldung Nr: 10 2008 051 241.9, eingereicht am 10. Oktober 2008; der US Provisional Anmeldung Nr. 61/195,835, eingereicht am 10. Oktober 2008 sowie der deutschen Patentanmeldung Nr. 10 2009 006 579.2, eingereicht am 29. Januar 2009 und der US Provisional Anmeldung Nr. 61/148,328, einreicht am 29. Januar 2009.

TECHNISCHES GEBIET DER ERFINDUNG

Die Erfindung betrifft einen Schalldämpfer für ein Hilfstriebwerk eines Flugzeugs mit einem Gehäuse und einem in dem Gehäuse angeordneten Strömungskanal, wobei der Zwischenraum zwischen dem Strömungskanal und dem Gehäuse in mehrere Zellen unterteilt ist. Die Erfindung betrifft ferner die Verwendung eines Schalldämpfers für ein Hilfstriebwerk in einem Flugzeug sowie ein Flugzeug mit mindestens einem Hilfstriebwerk und mindestens einem erfindungsgemäßen Schalldämpfer.

HINTERGRUND DER ERFINDUNG

Verkehrsflugzeuge weisen verbreitet ein Hilfstriebwerk auf (auch "APU" für "Auxiliary Power Unit" genannt) auf, welches sich häufig in einer Heckspitze des Flugzeugs befindet und auf Basis einer Strömungskraftmaschine, zum Beispiel eines Turboluftstrahltriebwerks, ausgeführt ist und das Flugzeug mit Druckluft und elektrischer Energie versorgt. Bei einer derartigen Anordnung tritt das beim Betrieb entstehende Abgas durch einen Abgasauslass im Bereich der Heckspitze in die Umgebung des Flugzeugs aus, so dass möglichst unter allen bei Bodenaufenthalt des Flugzeugs und bei im Flug auftretenden Bedingungen keines der Leitwerke des Flugzeugs damit in Berührung kommt. Aufgrund des häufigen Betriebs des Hilfstriebwerks bei Bodenaufenthalt des Flugzeugs kann dessen Geräuschentwicklung eine Lärmbelästigung für den Flughafen und dessen Umgebung darstellen. Zum Reduzieren der Geräuschentwicklung am Boden werden Schalldämpfer eingesetzt, die sich über eine entsprechende Ankopplung am Abgasauslass des Hilfstriebwerks befinden und den Abgaslärm entsprechend dämpfen.

US 2006/043236 A1 zeigt einen in axialer Richtung variablen Schalldämpfer für ein Hilfstriebwerk eines Flugzeugs mit einer porösen Innenwand und einer Vielzahl von Zellen zwischen einer äußeren Oberfläche und einer inneren Oberfläche, die mit Öffnungen an der inneren Oberfläche kommunizieren.

US 2008/078863 A1 zeigt einen Schalldämpfer für ein Hilfstriebwerk eines Flugzeugs mit einem Gehäuse, einem darin geführten Strömungskanal und zwischen dem Strömungskanal und dem Gehäuse angeordneten äußeren Zellen.

US 2006/180388 A1 zeigt einen Schalldämpfer für ein Hilfstriebwerk eines Flugzeugs, welches exzentrisch ausgeführt ist.

US 2002/104707 A1 zeigt einen Schalldämpfer für ein Hilfstriebwerk eines Flugzeugs mit einem Gehäuse und einem darin angeordneten porösen Strömungskanal.

Es ist beispielsweise aus EP 1 398 473 B1 und US 6 772 857 B2 bekannt, Einströmgeräusche an Flugzeugtriebwerken mittels schalldämmender Schichten mit einer Wabenstruktur und einem Reflektor zu mindern. Weiterhin ist eine Vielzahl unterschiedlich gearteter Schalldämpfer für Hilfstriebwerke im Stand der Technik bekannt, wobei im Folgenden jedoch eine spezifische Bauart besondere Berücksichtigung findet.

Dort wird ein Strömungskanal vorgesehen, der einen Abgaseinlass mit einem Abgasauslass verbindet und von einem Gehäuse umgeben ist. Das Volumen zwischen dem Gehäuse und dem Strömungskanal ist durch Zwischenwände (auch sogenannte Partitionen) in mehrere Zellen unterteilt, wobei die Mehrheit der Partitionen in äquidistanter Weise entlang des Strömungskanals angeordnet sind. Der Strömungskanal ist üblicherweise aus einem metallischen, filzartigen Material aufgebaut, das die Temperatur und Korrosivität des Abgases verträgt und gleichzeitig porös ist. Dadurch wird nicht nur eine Leitung des Abgases durch den Strömungskanal entlang seiner Erstreckung in dem Gehäuse ermöglicht, sondern auch eine Wechselströmung quer dazu durch das Wandmaterial des Strömungskanals hindurch in die einzelnen Zellen, so dass beim Durchtritt durch das Wandmaterials des Strömungskanals durch Reibung Schallenergie in Wärme umgesetzt wird und dadurch das Abgasgeräusch gemindert wird.

Problematisch bei bekannten Schalldämpfern dieser Bauart ist beispielsweise ein ungenügendes Verhältnis zwischen dem Durchmesser des Strömungskanals und des Gehäuses, so dass beispielsweise der äußere Durchmesser der Zellen vergleichsweise relativ niedrig ist und dadurch besonders eine erste auftretende Transversalmode des Abgasschalls nur schwach gedämpft werden kann. Zudem werden längere Zellen für eine deutliche Dämpfung sämtlicher auftretender Transversalmoden benötigt, so dass schließlich die Schalldämpfungseffektivität pro Längeneinheit des Schalldämpfers sinkt. Es sind jedoch auch Schalldämpfer bekannt, bei denen ein Durchmesser des Gehäuses ausreichend ist, so dass die erste Transversalmode ausreichend stark gedämpft werden kann, die zweite Transversalmode allerdings nicht. Bei breitbandigem Geräusch wird die Schallenergie überwiegend aufgrund der Erregung von Resonanzmoden in einem Schalldämpfer im Bereich von Resonanzfrequenzen übertragen. Ein weiterer Nachteil dieser vorbekannten Schalldämpfer ist demgemäß, dass die Schalldämpfung aufgrund von stehenden Wellen in dem Schalldämpfer für bestimmte Frequenzbereiche sehr gering ist.

Bei der Auslegung eines entsprechenden Schalldämpfers ist besonders bei Flugzeugen der zur Verfügung stehende Bauraum stark begrenzt, so dass zur Steigerung des Schalldämmmaßes die äußeren Abmessungen des Schalldämpfers nicht beliebig vergrößert werden können, sondern stets konstant oder zumindest auf einem geringstmöglichen Niveau gehalten werden sollten.

Mit den vorhandenen Bauweisen von Schalldämpfern für Hilfstriebwerke eines Flugzeugs sind nicht ohne Weiteres Verbesserungen im Schalldämmmaß zu erwarten, ohne die äußeren Abmessungen des Schalldämpfers zu vergrößern.

ZUSAMMENFASSUNG DER ERFINDUNG

Es könnte demnach als Aufgabe der Erfindung angesehen werden, einen Schalldämpfer für ein Hilfstriebwerk eines Flugzeugs vorzuschlagen, bei dem eine verbesserte Schalldämpfung erreicht werden kann, ohne den Schalldämpfer in seinen äußeren Abmessungen zu vergrößern. Der Schalldämpfer sollte möglichst kompakt sein, aber dennoch eine effektive Schalldämpfung in einem weiten Frequenzbereich ermöglichen.

Diese Aufgabe wird durch einen Schalldämpfer für ein Hilfstriebwerk eines Flugzeugs gemäß den Merkmalen des unabhängigen Anspruchs 1 gelöst. Vorteilhafte Weiterbildungen sind den Unteransprüchen zu entnehmen.

Durch einen Einlass in den Strömungskanal eintretendes Abgas bewegt sich innerhalb des Strömungskanals zu einem Auslass und tritt dort in die Umgebung des Flugzeugs aus. Das Wandmaterial des erfindungsgemäßen Schalldämpfers ist - wie auch im Stand der Technik bekannt - porös und erlaubt eine Wechselströmung durch eine Wand des Strömungskanals. Beim Durchströmen des porösen Wandmaterials wird ein Teil der Schallenergie in Wärme umgewandelt, so dass eine gewisse Geräuschreduktion eintritt. Über die entlang des erfindungsgemäßen Schalldämpfers verteilten Zellen wiederholt sich diese Schallreduktion mehrmals, so dass eine gute Schalldämpfung erreicht werden kann.

Gemäß einem ersten Aspekt der Erfindung weist der erfindungsgemäße Schalldämpfer Partitionen auf, die den Schalldämpfer in mehrere Schalldämpferzellen unterteilen. Die Zellen bestehen aus je einer äußeren Zelle und einer inneren Zelle (28-44, 52, 74), wobei die äußere Zelle als der abgetrennte Bereich des Zwischenraums zwischen dem Gehäuse und dem Strömungskanal angesehen wird. Die innere Zelle (28-44, 52, 74) ist der Bereich des Strömungskanals, der von der äußeren Zelle umschlossen wird. Die Verteilung der Partitionen ist bei dem erfindungsgemäßen Schalldämpfer nicht äquidistant. Vielmehr werden die Partitionen derart zueinander angeordnet, dass zumindest zwei Gruppen von Zellen in dem Zwischenraum zwischen dem Gehäuse und dem Strömungskanal gebildet werden. Äußere Zellen einer ersten Gruppe weisen jeweils eine Länge aus einem ersten Intervall auf und Zellen einer zweiten Gruppe jeweils eine Länge aus einem zweiten Intervall, wobei das erste und das zweite Intervall zueinander benachbart sind und jeweils eine Breite aufweisen, die im Wesentlichen dem 0,1-fachen des hydraulischen Durchmessers des Strömungskanals (6) entspricht. Die einzelnen Zellen unterscheiden sich dadurch derart voneinander, dass sie zum effektiven Dämpfen zumindest der ersten zwei oder drei Transversalmoden geeignet sind.

Durch die nicht äquidistante Unterteilung des Schalldämpfers durch Partitionen ist es zusätzlich möglich, eine Ausbreitung des Hilfstriebwerks-Geräuschs mit unterschiedlicher transversaler Verteilung und mit unterschiedlichen Winkeln entsprechender Geschwindigkeitsvektoren besser zu berücksichtigen. Die Zellen aus den einzelnen Gruppen können abwechselnd aneinander angereiht werden. Mit einer Kombination aus dem Volumenverhältnis der inneren und der äußeren Zellen zueinander sowie den unterschiedlichen Zellenlängen kann eine höhere Schalldämpfungseffektivität pro Längeneinheit für breitbandiges Geräusch eines Hilfstriebwerks eines Flugzeugs erreicht werden.

Bevorzugt werden entlang des Schalldämpfers mehrere äußere Zellen angeordnet, die zu den genannten Abmessungsintervallen gehören, in einer alternierenden, gruppierten oder heterogen durchmischten Aneinanderreihung. Die Definition der einzelnen vorteilhaften Abmessungen über den hydraulischen Durchmesser ist besonders sinnvoll, denn die Querschnitte der einzelnen Komponenten des erfindungsgemäßen Schalldämpfers müssen nicht notwendigerweise kreisförmig oder über die gesamte Länge des erfindungsgemäßen Schalldämpfers kreisförmig ausgebildet sein. Vielmehr eignet sich diese Definition auch für ovale oder bereichsweise abgeflachte Schalldämpfer.

Gemäß einem zweiten Aspekt der Erfindung ist es vorteilhaft, den erfindungsgemäßen Schalldämpfer derart auszugestalten, dass die Volumina der äußeren Zellen im Wesentlichen den 1,0- bis 1,2-fachen der Volumina der korrespondierenden inneren Zellen entsprechen. Hierdurch wird erreicht, dass die poröse Wand des Strömungskanals in einem Bereich angeordnet ist, bei dem die radialen Geschwindigkeiten zumindest der ersten beiden Transversalmoden relativ hoch sind, so dass nicht nur eine der zumindest ersten und zweiten Transversalmoden gedämpft werden können. Hierdurch kann die Zellenlänge und damit insgesamt die Länge des erfindungsgemäßen Schalldämpfers reduziert werden.

Gemäß einer vorteilhaften Weiterbildung ist in einem zylindrischen Abschnitt des Gehäuses des erfindungsgemäßen Schalldämpfers mindestens eine der äußeren Zellen durch eine zusätzliche poröse Absorberschicht in einen Außenbereich und einen Innenbereich unterteilt, so dass der Außenbereich der mindestens einen äußeren Zelle nicht direkt mit dem Strömungskanal über dessen poröses Wandmaterial kommuniziert. Mittels der Absorberschicht ist der Außenbereich der betreffenden äußeren Zelle jedoch mit dem Innenbereich der äußeren Zelle verbunden, wobei der Innenbereich durch das poröse Wandmaterial des Strömungskanals mit dem Strömungskanal verbunden ist. Eine Kommunikation zwischen dem Außenbereich der betreffenden äußeren Zelle ist dementsprechend nur durch deren Innenbereich über die poröse Absorberschicht und die poröse Wand des Strömungskanals möglich. Dies hat zur Folge, dass Resonanzschwingungen unterdrückt werden, wenn Luft durch die Absorberschicht aus dem Innenbereich in den Außenbereich der betreffenden äußeren Zelle gedrückt wird.

Durch die Integration einer zusätzlichen porösen Absorberschicht zur weiteren Unterteilung der äußeren Zellen kann ein deutlich vorteilhafteres Volumenverhältnis zwischen äußeren Zellen und inneren Zellen erreicht werden, wobei als innere Zellen die Bereiche innerhalb des Strömungskanals zu verstehen sind, die jeweils von einer äußeren Zelle umschlossen sind. Durch das verbesserte Volumenverhältnis und die gleichzeitige Steigerung der Unterdrückung von Resonanzschwingungen kann mit dem erfindungsgemäßen Schalldämpfer in einem gleichbleibenden oder sogar geringeren Bauraum eine bessere Schalldämmung erreicht werden, als bisher bekannt.

In einer besonders vorteilhaften Weiterbildung des erfindungsgemäßen Schalldämpfers weisen mindestens zwei in einem zylindrischen Abschnitt des Gehäuses angeordnete und derart gestaltete äußere Zellen eine Länge auf, die dem 0,2- bis 0,6-fachen hydraulischen Durchmesser des Strömungskanals entspricht.

Gleichermaßen ist es vorteilhaft, dass diese äußeren Zellen jeweils eine Höhe aufweisen, die dem 0,3- bis 0,45-fachen hydraulischen Durchmesser des Strömungskanals entspricht. Hierdurch werden Resonanzschwingungen weiter unterdrückt und das Schalldämmmaß des erfindungsgemäßen Schalldämpfers weiter verbessert.

In einer weiteren vorteilhaften Weiterbildung des erfindungsgemäßen Schalldämpfers ist die Absorberschicht zum Ausformen schraubenförmiger Außen- und Innenbereiche ausgeformt.

In einer ebenso vorteilhaften Weiterbildung des erfindungsgemäßen Schalldämpfers könnte die Absorberschicht als kreisförmiger oder elliptischer Zylinder geformt sein, so dass die Außenbereiche der äußeren Zellen ringförmig um oder neben den Innenbereichen der äußeren Zellen herum verlaufen. Alternativ dazu könnte die Absorberschicht auch eine konische Form aufweisen.

Zur weiteren Steigerung der vorteilhaften schalldämmenden Eigenschaften des erfindungsgemäßen Schalldämpfers entspricht die Summe der Volumina aller Außenbereiche einer äußeren Zelle dem 0,8- bis 1,2-fachen der Summe der Volumina aller Innenbereiche einer äußeren Zelle.

Es ist zur Verbesserung der Schalldämpfung zudem vorteilhaft, dass die jeweilige Länge der Zellen der ersten Gruppe im Wesentlichen dem 0,3- bis 0,4-fachen hydraulischen Durchmessers des Strömungskanals entspricht.

In einer vorteilhaften Weiterbildung des erfindungsgemäßen Schalldämpfers entspricht die jeweilige Länge der Zellen der zweiten Gruppe vorteilhaft dem 0,4- bis 0,5-fachen hydraulischen Durchmesser.

Ferner ist auch denkbar, Zellen vorzusehen, die eine dem 0,2- bis 0,3-fachen hydraulischen Durchmesser jeweilige Länge aufweisen. Es wären ferner auch andere Gruppen mit anderen Längenintervallen denkbar.

In einer weiterhin vorteilhaften Weiterbildung des erfindungsgemäßen Schalldämpfers ist der Strömungskanal derart dimensioniert, dass im Bereich der Wand des Strömungskanals die radialen Geschwindigkeitsanteile zumindest einer ersten und einer zweiten in dem Schalldämpfer gebildeten Transversalmode ein gemeinsames Maximum aufweisen. Dadurch wird eine deutlich verbesserte Schalldämpfung erreicht.

Weist der Abgaslärm des Hilfstriebwerks zusätzlich auch hochfrequente Geräuschanteile auf, ist es vorteilhaft, mindestens eine zusätzliche Zelle in den Schalldämpfer zu integrieren, bei der die externe Zelle ein Volumen aufweist, das dem 0,75- bis 0,85-fachen Volumen der inneren Zelle entspricht. Dadurch wird die Position der Wand des Strömungskanals an die radiale Geschwindigkeitsverteilung des hochfrequenten Geräuschs angepasst, so dass auch dort eine möglichst effektive Dämpfung mehrerer Transversalmoden erfolgen kann.

Das Wandmaterial des Strömungskanals ist in vorteilhafter Weise ähnlich gestaltet wie im Stand der Technik üblich, das heißt aus einem Metallfilz bzw. einem ähnlichen hitzefesten, korrosionsfesten und porösen Material. Der Strömungswiderstand dieses Wandmaterials ist in vorteilhafter Weise dabei so zu bemessen, dass er dem 0,8- bis 1,2-fachen eines Grundwiderstands beträgt, der temperaturabhängig

$$R = 410 \cdot \left(\frac{293}{T}\right)^{1.26} \frac{Pa}{\frac{m}{s}}$$

beträgt. Hierbei ist T die absolute Temperatur des Abgases, die in K (Kelvin) angegeben wird.

Generell ist der Widerstand derart bemessen, dass das geräuschinduzierte Durchströmen des Abgases ermöglicht und die Schallenergie zumindest zu einem Teil in Wärme umgesetzt wird. Dies bedeutet im Gegenzug auch, dass der Widerstand groß genug sein muss, um möglichst viel Schallenergie in Wärme umzusetzen.

Weiterhin ist besonders vorteilhaft, wenn das Gehäuse zumindest in einem Abschnitt konisch ausgeformt ist und/oder mehrere konische Komponenten aufweist, so dass eine verbesserte Anpassung an den zur Verfügung stehenden Bauraum innerhalb einer Flugzeugheckspitze erreicht werden kann.

Es ist ferner bevorzugt, dass die Partitionen Drainagelöcher aufweisen. Diese sind bevorzugt jeweils am tiefsten Punkt der Partitionen und sorgen dafür, dass sich kein Kraftstoff oder dergleichen innerhalb der einzelnen Zellen akkumulieren kann. Akustisch sind die Drainagelöcher bei ausreichend geringer Größe als nicht störend zu beurteilen.

Gemäß einer vorteilhaften Weiterbildung des erfindungsgemäßen Schalldämpfers sind das Gehäuse und der Strömungskanal zur Verbesserung der Installation an eine Hecksektion des Flugzeugs in Form eines verlängerten Bauteils angepasst.

Bei dieser Weiterbildung ändert sich der Querschnitt eines hinteren Bereichs des Strömungskanals und des diesen Bereich des Strömungskanals umgebenden Gehäuses kontinuierlich von einer ersten Form in eine zweite Form, wobei in der ersten Form jeder Punkt im Querschnitt des Strömungskanals einen Abstand zu einem nächstgelegenen Außenkonturpunkt aufweist, der höchstens dem halben hydraulischen Durchmesser der ersten Form entspricht und wobei in der zweiten Form jeder Punkt im Querschnitt des Strömungskanals einen Abstand zu einem nächstgelegenen Außenkonturpunkt aufweist, der höchstens einem Viertel des hydraulischen Durchmessers der ersten Form entspricht.

Dies könnte sich etwa ein der Form eines Fischschwanzes widerspiegeln, die zum Auslassende abgeflacht und verbreitert wird.

Zwischen dem Strömungskanal und dem Gehäuse könnten in diesem Bereich des verlängerten Bauteils zumindest teilweise Wabenkemmaterialien eingesetzt werden, die die schallabsorbierende Verkleidung bilden.

Bevorzugt sind die Querschnittsflächen der ersten Form und der zweiten Form identisch, wobei die Form der Querschnitte oval, im Wesentlichen rechteckig oder anders geformt sein könnten. In einer ebenso vorteilhaften Weiterbildung des erfindungsgemäßen Schalldämpfers könnte die Querschnittsfläche der zweiten Form geringer als die Querschnittsfläche der ersten Form sein. Dadurch werden die radialen Moden der sich ausbreitenden hochfrequenten Schallwellen deformiert und der Abstand ihrer Schwingungsknoten-Linien werden in etwa halbiert. Derartig deformierte Moden können sich nicht in den zum Auslass gewandten Bereich des Schalldämpfers mit der zweiten Form ausbreiten und werden wieder in den stromaufwärts gelegenen Bereich mit der ersten Form reflektiert.

Zudem werden Schwingungsmoden mit einer geringeren Anzahl von Schwingungsknoten-Linien in dem stromabwärts gelegenen Bereich mit der engeren zweiten Form besser gedämpft, da die Zentren der Geräuschfelder dichter an der Schall absorbierenden Wand liegen, die durch das Gehäuse, etwaige Wabenkem-Elemente und den Strömungskanal gebildet wird.

In einer weiter vorteilhaften Ausführungsform des erfindungsgemäßen Schalldämpfers befindet sich zwischen dem stromaufwärts gelegenen Bereich mit der ersten Form und dem stromabwärts gelegenen Bereich mit der zweiten Form ein Zwischenbereich, in dem ein Übergang von der ersten Form zu einem rechteckigen Querschnitt und anschließend zur zweiten Form über ebene Wandflächen vollzogen wird.

Ferner könnte es vorteilhaft sein, die Hauptachsen der ersten Form und der zweiten Form gegeneinander zu verdrehen, so dass eine bessere Anpassung an eine Geometrie der Hecksektion des Flugzeugs erfolgen kann.

Allgemein sind die vorgenannten Merkmale, die sich auf eine vorteilhafte Gestaltung eines Endbereichs eines Schalldämpfers beziehen, nicht beschränkt auf zylindrisch ausgeformte Strömungskanäle bzw. Gehäuse erfindungsgemäßer Schalldämpfer, sondern es können auch andere beliebige runde oder eckige Querschnittsformen vorgesehen werden.

In einer vorteilhaften Weiterbildung des erfindungsgemäßen Schalldämpfers ist der Auslass des erfindungsgemäßen Schalldämpfers verlängert. An dem Auslass ist ein zusätzlicher ringförmiger Kanal angeordnet, der mit dem Auslasskanal über mindestens eine Öffnung verbunden ist. Bevorzugt weist der Ringkanal eine Mehrzahl von genau 8 Öffnungen auf, die über den Ringkanal verteilt sind.

Das eigentliche Ziel dieses Ringkanals liegt darin, eine sich ungestört im Auslass nach außen ausbreitende Eigenschwingung in einer ersten Radialmode deutlich abzudämpfen, indem durch die Öffnungen Schwingungen induziert werden, die sich gegenseitig aufheben. Eine Schallwelle, die durch eine dieser Öffnungen in den ringförmigen Kanal tritt, kann sich in dem Ringkanal erstrecken und eine benachbarte Öffnung erreichen. Beim Erreichen dieser benachbarten Öffnung haben die vorliegenden Schallwellen bereits einen bestimmten Weg zurückgelegt, der dazu führt, dass die bei der benachbarten Öffnung ankommenden Schallwellen eine entgegengesetzte Phase wie die Schallwellen aufweisen könnte, die durch die benachbarte Öffnung in den Ringkanal ragen. Es treffen demnach Schallwellenberge auf Schallwellentäler, die sich gegenseitig in ihrer Wirkung aufheben.

Dies führt im Endeffekt dazu, dass sich Phasen und Gegenphasen an sämtlichen Öffnungen des ringförmigen Kanals aufheben, so dass eine starke Dämpfung der Eigenschwingung in der ersten Radialmode erfolgt. Einige bekannte Schalldämpfer weisen eine Art Resonanzdurchlass auf, der durch die Resonanz von Longitudinal-Radialmoden in dem Auslass in einem Bereich der kritischen Frequenz der ersten radialen Eigenmode hervorgerufen wird. Dies bedeutet mit anderen Worten, dass ein Frequenzband existiert, bei dem ein hoher Schalldurchlass vorliegt und kaum eine Dämpfung erfolgt. Der zusätzliche Ringkanal kann diesen Nachteil eliminieren oder zumindest verringern. Resonanzschwingungen der Luft bzw. des Abgases in dem Auslass werden aufgrund der Interferenz des Resonanzgeräuschfelds innerhalb des Auslasses mit sich ausbreitendem Geräusch innerhalb des Ringkanals und der Absorption der akustischen Energie innerhalb des Ringkanals unterdrückt.

Bevorzugt weist der Ringkanal 8 Öffnungen auf, die gleichförmig voneinander beabstandet an einem inneren Umfang des Ringkanals angeordnet sind. Bevorzugt sind die Öffnungen bei geeigneter Auslegung derart voneinander beabstandet, dass der von den Schallwellen zurückzulegende Weg zwischen zwei benachbarten Öffnungen einer halben Schwingung, d. h. dem Abstand zwischen einer Phase und einer Gegenphase, entspricht. Bei Verwendung einer abweichenden Anzahl von Öffnungen innerhalb des ringförmigen Kanals könnte es auch möglich, dass jeweils übernächste oder weiter auseinander liegende Öffnungspaare eine Phase und eine Gegenphase bilden. Die Erfindung soll sich nicht darauf beschränken, dass sich lediglich die Schallwellen zweier direkt benachbarter Öffnungen gegenseitig aufheben.

Weiter bevorzugt sind die Öffnungen des Ringkanals mit einem durchlässigen Absorptionsmaterial abgedeckt, so dass bereits beim Durchtreten der Schallwellen durch das Absorptionsmaterial ein Teil der Schallenergie aufgrund des Widerstands des Absorptionsmaterials in Wärme umgewandelt werden kann.

Gemäß einer bevorzugten Weiterbildung des erfindungsgemäßen Schalldämpfers weist das Absorptionsmaterial in dem ringförmigen Kanal eine Admittanz Y auf, die im Wesentlichen der folgenden Formel entspricht:

$$Y = [0{,}5 \ldots 1{,}5] \cdot \left( \frac{A_N}{\rho \cdot c} \right)$$

Hierbei ist p die Luftdichte, c die Schallgeschwindigkeit, AN die Normalquerschnittsfläche des ringförmigen Kanals und der Ausdruck "$\rho \cdot c$" die Impedanz des Abgases.

Gemäß einer weiteren vorteilhaften Weiterbildung des erfindungsgemäßen Schalldämpfers ist der ringförmige Kanal an einem inneren Umfang, das heißt an der Fläche, die zum Mittelpunkt des ringförmigen Kanals gerichtet ist, offen, wobei dieser innere Umfang auf den Auslass des Schalldämpfers gesetzt ist. Die einzelnen Öffnungen, die den ringförmigen Kanal mit dem Auslass verbinden, sind daher lediglich in dem Auslass selbst eingearbeitet, so dass die Fertigungskosten zum Herstellen des ringförmigen Kanals sinken, ebenso dessen Gewicht aufgrund einer geringeren Materialmenge.

Der ringförmige Kanal ist bevorzugt in einem mittleren Bereich des Auslasses, d.h. zwischen dem Schalldämpferende und einem offenen Ende des Auslasses, angeordnet und liegt weder bündig am Schalldämpferende noch am offenen Ende des Auslasses an.

Der ringförmige Kanal kann schließlich einen beliebigen Normalquerschnitt aufweisen, wobei als Normalquerschnitt eine Fläche zu verstehen ist, die um einen Mittelpunkt des ringförmigen Kanals rotierend den ringförmigen Kanal beschreibt. Dieser Normalquerschnitt kann rechteckig, dreieckig, zylindrisch, konisch, beliebig geschwungen oder auf andere Arten realisiert sein. Der Gegenstand der Erfindung ist nicht darauf beschränkt, welche Normalquerschnittsform der ringförmige Kanal aufweist.

Weiterhin wird die Aufgabe auch gelöst durch ein Flugzeug mit mindestens einem Hilfstriebwerk und mindestens einem erfindungsgemäßen Schalldämpfer gemäß den Merkmalen des weiteren unabhängigen Anspruchs.

KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.

Fig. 1 zeigt eine Prinzipdarstellung eines erfindungsgemäßen Schalldämpfers.

Fig. 2a + b zeigen Schalldruck- und Geschwindigkeitsverteilungen in eine Zelle des erfindungsgemäßen Schalldämpfers.

Fig. 3 zeigt eine Prinzipdarstellung der Längenintervalle der Zellen.

Fig. 4 zeigt eine Prinzipdarstellung eines weiteren Ausführungsbeispiels eines erfindungsgemäßen Schalldämpfers.

Die Fig. 5a bis 5c zeigen unterschiedlich ausgeformte Absorberschichten in den äußeren Zellen in jeweils einem Schalldämpferausschnitt.

Fig. 6a und 6b zeigen weiter unterschiedlich ausgeformte Absorberschichten in jeweils einem Schalldämpferausschnitt.

Fig. 7a und 7b zeigen ebenfalls weiter unterschiedlich ausgeformte Absorberschichten in jeweils einem Schalldämpferausschnitt.

Fig. 8a und 8b zeigen ein weiteres Ausführungsbeispiel des erfindungsgemäßen Schalldämpfers.

Fig. 9 zeigt ein weiteres Ausführungsbeispiel des erfindungsgemäßen Schalldämpfers.

Fig. 10 zeigt ein weiteres Ausführungsbeispiel des erfindungsgemäßen Schalldämpfers.

Fig. 11 zeigt die Deformation von Radialmoden in einem verlängerten Bauteils am Ende eines erfindungsgemäßen Schalldämpfers.

Fig. 12 zeigt einen exemplarischen Schalldämpfer mit einem exemplarischen ringförmigen Kanal.

Fig. 13 zeigt schematisch Phasen und Gegenphasen in einem ringförmigen Kanal an einem Auslass eines beliebigen erfindungsgemäßen Schalldämpfers.

Fig. 14 zeigt ein Flugzeug mit mindestens einem Hilfstriebwerk und mindestens einem erfindungsgemäßen Schalldämpfer.

DETAILLIERTE BESCHREIBUNG EXEMPLARISCHER AUSFÜHRUNGSFORMEN

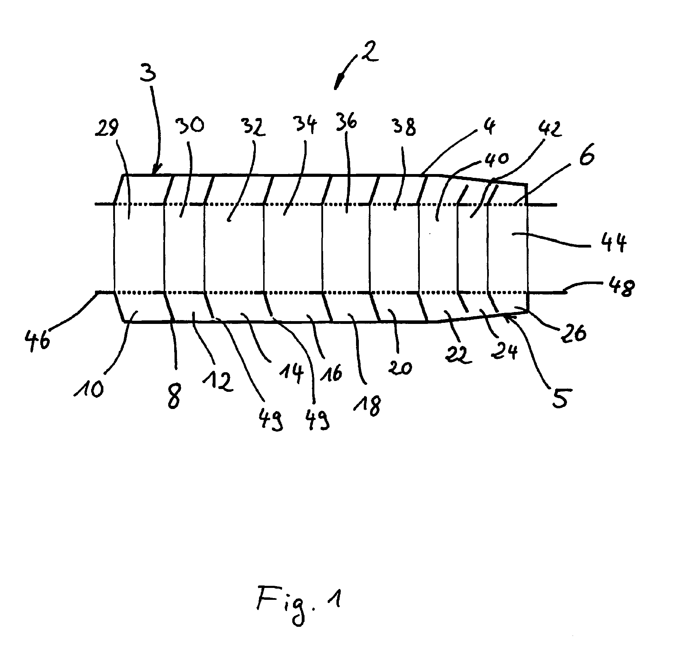

In Fig. 1 ist ein erfindungsgemäßer Schalldämpfer 2 gezeigt, der ein Gehäuse 4 mit einer oder mehreren exemplarisch zylindrischen Komponenten 3 und einer beispielhaft dargestellten konischen Komponente 5 aufweist, sowie einen Strömungskanal 6, der in dem Gehäuse 4 angeordnet ist. Zwischen dem Strömungskanal 6 und dem Gehäuse 4 sind mehrere Partitionen 8 positioniert, die schräg sowohl zu dem Strömungskanal 6 als auch zu dem Gehäuse 4 angeordnet sind. In entsprechenden Durchlässen der Partitionen 8 ist der Strömungskanal 6 locker gelagert. Die schräge Anordnung der Partitionen 8 ermöglicht eine verbesserte Wärmeausdehnungsfähigkeit der Partitionen 8 bzw. des erfindungsgemäßen Schalldämpfers 2 im Allgemeinen. Würden die Partitionen 8 lediglich als scheibenförmige und senkrecht sowohl zu dem Strömungskanal 6 und zu dem Gehäuse 4 angeordnete Körper ausgeführt sein, würde bei entsprechender Beaufschlagung des erfindungsgemäßen Schalldämpfers 2 mit heißem Abgas möglicherweise eine Zerstörung sowohl des Strömungskanals 6 als auch des Gehäuses 4 resultieren.
Die Partitionen 8 bilden entlang der Erstreckung des erfindungsgemäßen Schalldämpfers 2 mehrere äußere Zellen 10 bis 26, die jeweils eine innere Zelle 28 bis 44 umrahmen.
Heißes Abgas strömt durch einen Einlass 46 in den erfindungsgemäßen Schalldämpfer 2 ein, strömt nacheinander durch die einzelnen inneren Zellen 28 bis 44 und verlässt den erfindungsgemäßen Schalldämpfer 2 wieder an einem Auslass 48. Dabei werden in dem erfindungsgemäßen Schalldämpfer 2 Resonanzschwingungen mit mehreren Transversalmoden mit Geschwindigkeitsvektoren schräg zur Erstreckungsrichtung des erfindungsgemäßen Schalldämpfers 2 angeregt, durch die sich eine Wechselströmung durch das poröse Wandmaterial des Strömungskanals 6 einstellt. Durch die Querströmung in die einzelnen äußeren Zellen 10 bis 26 bei Überwindung des vorbestimmten Strömungswiderstands des Wandmaterials des Strömungskanals 6 wird ein Teil der Schallenergie in Wärme umgesetzt, so dass der Abgaslärm reduziert wird. Durch die unterschiedlich abgestimmten Abstände der einzelnen Partitionen 8 zueinander und der damit verbundenen verschiedenen Volumina der inneren Zellen 28 bis 44 und der äußeren Zellen 10 bis 26 wird eine möglichst breitbandige Reduktion des Abgaslärms erreicht.
Zur Vermeidung der Ansammlung von Kraftstoff in den äußeren Zellen 10 bis 26 weisen die Partitionen 8 teilweise oder sämtlich ein oder mehrere Drainagelöcher 49 auf, die sich besonders vorteilhaft am jeweils tiefsten Punkt der Partitionen 8 befinden.

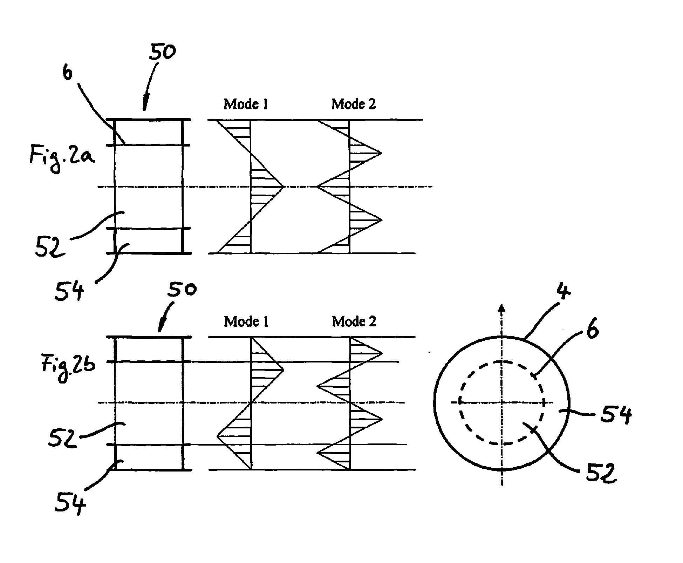

In Fig. 2a wird die Schalldruckverteilung des Abgases über dem Radius r in einer exemplarisch dargestellten einzelnen Zelle 50 mit einer inneren Zelle 52 und einer äußeren Zelle 54 dargestellt. In der Zelle 50 steht die gestrichelte Linie zwischen der inneren Zelle 52 und der äußeren Zelle 54 für einen Teil der Wand des Strömungskanals 6. Fig. 2b zeigt die radiale Geschwindigkeitsverteilung über dem Radius r in der gleichen Zelle 50.

Es ist aus dieser Darstellung heraus ersichtlich, dass es notwendig ist, den Strömungskanal 6 derart zu dimensionieren, dass an dessen Wandfläche möglichst in allen auftretenden Transversalmoden eine besonders hohe Radialgeschwindigkeit vorliegt, die eine möglichst gute Dissipation durch die Wandfläche ermöglicht. In Fig. 2b wird ersichtlich, dass die dort gewählte Dimensionierung des Strömungskanals 6 einem Optimum nahe kommt, da sowohl in der Transversalmode 1 (gekennzeichnet mit "Mode 1") als auch in der Transversalmode 2 (gekennzeichnet mit "Mode 2") eine relativ hohe Radialgeschwindigkeit besteht. Dadurch werden zumindest die ersten beiden Transversalmoden optimal berücksichtigt.

Der Widerstand der porösen und für eine Wechselströmung durchlässigen Wandfläche des Strömungskanals 6 ist so zu dimensionieren, dass möglichst eine ausgeprägte Wechselströmung zwischen der inneren Zelle 52 und der äußeren Zelle 54 eintritt, jedoch sollte der Strömungswiderstand auch so hoch sein, dass möglichst viel Schallenergie durch Reibung in Wärme umgesetzt werden kann. Eine mögliche vorteilhafte Dimensionierung für den Strömungswiderstand, der durch Materialwahl, Dimensionierung der Wandstärke und dergleichen individuell gestaltet werden kann, wird vorangehend in der Beschreibungseinleitung deutlicher geschildert.

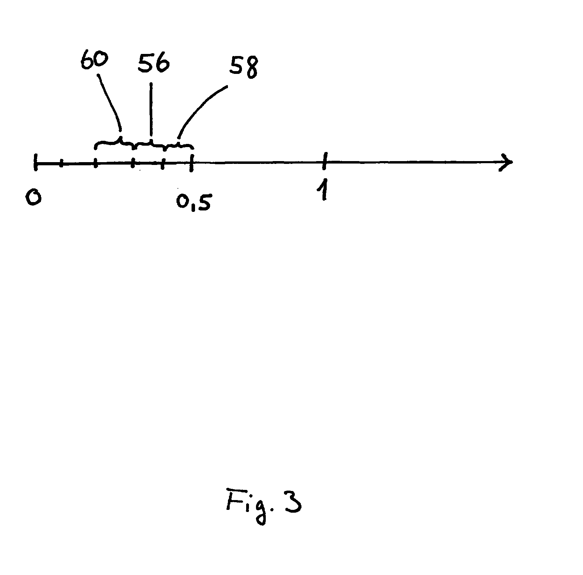

In Fig. 3 wird exemplarisch anhand eines Zahlenstrahls dargestellt, wie die Längen der äußeren Zellen 10 bis 26 bzw. der inneren Zellen 28 bis 44 vorteilhaft ausgewählt werden können. Der Zahlenstrahl zeigt Vielfache des hydraulischen Durchmessers des Strömungskanals 6 mit einem exemplarisch markierten ersten Intervall 56 einer ersten Gruppe, einem zweiten Intervall 58 einer zweiten Gruppe und einem dritten Intervall 60 einer dritten Gruppe von äußeren Zellen 10 bis 26. Im Sinne der vorliegenden Erfindung sind gegebenenfalls auch abweichende Längenintervalle für äußere Zellen 10 bis 26 mit verschobenen Grenzen möglich, ohne auf die erfindungsgemäßen Vorteile verzichten zu müssen. Die Darstellung in Fig. 3 dient nur zur Verdeutlichung der Erfindung anhand eines ausgewählten Beispiels.

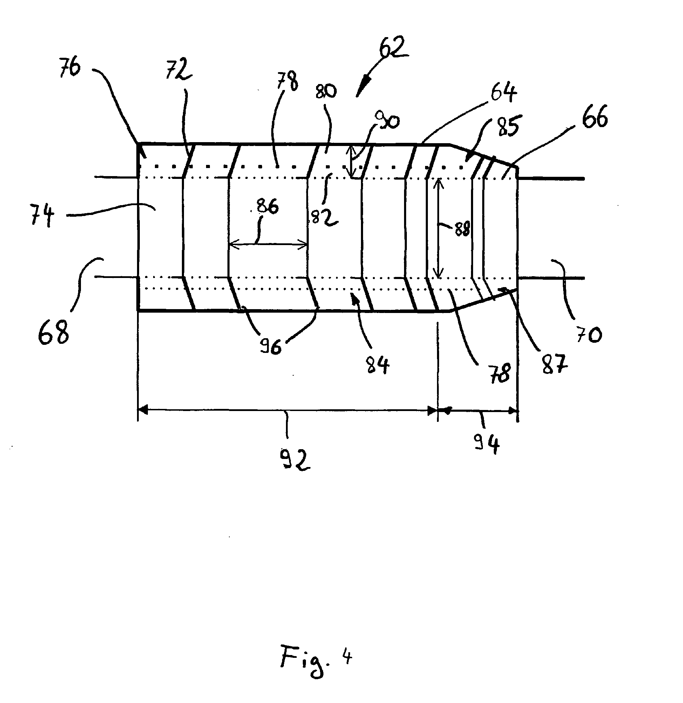

In Fig. 4 ist ein erfindungsgemäßer Schalldämpfer 62 gezeigt, der ein Gehäuse 64 und einen in dem Gehäuse 64 angeordneten Strömungskanal 66 aufweist. Der Strömungskanal 66 erstreckt sich von einem Einlass 68 zu einem Auslass 10 und ist aus einem porösen Material gebildet. Dieses Material des Strömungskanals 6 könnte beispielsweise ein Metallfilz oder ein ähnliches, poröses oder andersartig luftdurchlässig ausgestaltetes Material sein, das seine mechanische Integrität auch bei Beaufschlagung mit hohen Abgastemperaturen behält.

Zwischen dem Strömungskanal 66 und dem Gehäuse 64 ist ein Zwischenraum gebildet, der durch Partitionen 72 in Längsrichtung des erfindungsgemäßen Schalldämpfers 62 unterteilt wird. Jede Partition 72 erzeugt dabei ein Paar benachbarter Zellen, die jeweils aus einer inneren Zelle 74 und einer äußeren Zelle 76 bestehen. Eine innere Zelle 74 ist dabei als ein Abschnitt des Strömungskanals 66 zu verstehen, der von einer durch eine Partition 12 gebildeten äußeren Zelle 76 vollständig umschlossen ist.

Der vorliegende Schalldämpfer 62 weist die Besonderheit auf, dass die äußeren Zellen 76 durch eine zusätzliche poröse Absorberschicht 78 weiter unterteilt sind, so dass jede äußere Zelle 76 einen Außenbereich 80 und einen Innenbereich 82 aufweist. Der Außenbereich 80 ist dabei strömungsmechanisch nicht direkt mit der zugehörigen inneren Zelle 74 verbunden, sondern kann lediglich mit dem Innenbereich 82 über die poröse Absorberschicht 78 kommunizieren. Durch die poröse Ausgestaltung des Strömungskanals 66 ist jedoch eine Kommunikation mit jedem Innenbereich 82 mit dem Strömungskanal 66 möglich.

Durch die derartige Ausgestaltung des erfindungsgemäßen Schalldämpfers 62 mit einer zusätzlichen porösen Absorberschicht 78 können von dem durch den Strömungskanal 66 tretenden Abgasstrahl induzierte Resonanzschwingungen unterdrückt oder gänzlich eliminiert werden.

In dem dargestellten Falle weisen mindestens zwei erste äußere Zellen 76 und 84 eine Länge 86 auf, die dem 0,2- bis 0,6-fachen hydraulischen Durchmesser 88 des Strömungskanals 66 entspricht. Zusätzlich weisen diese mindestens zwei ersten äußeren Zellen 76 und 84 eine Höhe 90 auf, die dem 0,3- bis 0,45-fachen hydraulischen Durchmesser 88 des Strömungskanals 66 entspricht. Es sind weiterhin auch äußere Zellen 85 und 87 möglich, die nicht unbedingt vollständig dieser geometrischen Definition genügen müssen.

Bei der Bemessung des Strömungskanals 6 wird von einem hydraulischen Durchmesser 28 gesprochen, da ein kreisrunder Querschnitt des Schalldämpfers 2 und/oder des Strömungskanals 6 nicht zwingend notwendig ist. Es ist jedoch in der Strömungslehre üblich, für beliebige Querschnittsformen durchströmter Objekte einen hydraulischen Durchmesser zu definieren, der deren strömungsmechanische Eigenschaften vergleichbar macht.

Eine weitere Besonderheit des erfindungsgemäßen Schalldämpfers 62 aus Fig. 4 ist die Tatsache, dass ein erster Abschnitt 92 des Schalldämpfers 62 zylindrisch ausgestaltet ist, während ein weiterer Bereich 94 des erfindungsgemäßen Schalldämpfers 2 konisch ausgeformt ist. Dadurch kann eine bessere Anpassung an die Randbedingungen des Einbauraums erfolgen.

Die Partitionen 68 sind in dem dargestellten Falle schräg angeordnet, was eine verbesserte Wärmeausdehnungsfähigkeit der Partitionen 68 bzw. des erfindungsgemäßen Schalldämpfers 62 insgesamt zur Folge hat. Wären die Partitionen 68 lediglich als scheibenförmige und senkrecht sowohl zu dem Strömungskanal 66 und zu dem Gehäuse 64 angeordnete Körper, würde bei entsprechender Beaufschlagung des erfindungsgemäßen Schalldämpfers 62 mit heißem Abgas möglicherweise eine Zerstörung sowohl des Strömungskanals 66 als auch des Gehäuses 64 resultieren.

Die Partitionen 68 verfüllen weiterhin die Funktion des Haltems des Strömungskanals 66, der vorzugsweise locker in entsprechenden Durchlässen der Partitionen 68 angeordnet ist.

Prinzipiell ist das Wirkungsprinzip des gezeigten Schalldämpfers 62 wie folgendermaßen zu verstehen. Heißes Abgas strömt durch den Einlass 68 in den erfindungsgemäßen Schalldämpfer 62 ein, strömt nacheinander durch die einzelnen inneren Zellen 74 und verlässt den erfindungsgemäßen Schalldämpfer 62 wieder am Auslass 70. Dabei werden in dem erfindungsgemäßen Schalldämpfer 62 Resonanzschwingungen mit mehreren Transversalmoden mit Geschwindigkeitsvektoren schräg zur Erstreckungsrichtung des erfindungsgemäßen Schalldämpfers 62 angeregt, durch die sich eine Wechselströmung durch das poröse Wandmaterial des Strömungskanals 66 einstellt. Durch die Querströmung in die einzelnen äußeren Zellen 76 wird ein Teil der Schallenergie in Wärme umgesetzt, so dass der Abgaslärm reduziert wird. Innerhalb der äußeren Zellen 76 durchströmt das Abgas ebenfalls die poröse Absorberschicht 78, durch die entsprechende Resonanzschwingung abgeschwächt wird und ein weiterer Teil der Schallenergie absorbiert und in Wärme umgewandelt wird.

Durch unterschiedlich abgestimmte Abstände der einzelnen Partitionen 72 zueinander und den damit verbundenen verschiedenen Volumina der inneren Zellen 74 bzw. der äußeren Zellen 76 kann eine möglichst breitbandige Reduktion des Abgaslärms erreicht werden. Gleichermaßen ist die gesamte Anordnung des erfindungsgemäßen Schalldämpfers auch besonders gut in der Lage, neben hochfrequenten Geräuschen gleichzeitig auch tieffrequente Geräusche stark zu dämpfen, was durch ein relativ hohes Volumenverhältnis zwischen den äußeren Zellen und den inneren Zellen erreicht wird.

Zur Vermeidung der Ansammlung von Kraftstoff in den äußeren Zellen 76 weisen die Partitionen 72 teilweise oder sämtlich ein oder mehrere Drainagelöcher 96 auf, die sich zum verbesserten Auslaufen besonders vorteilhaft am jeweils tiefsten Punkt der Partitionen 72 befinden.

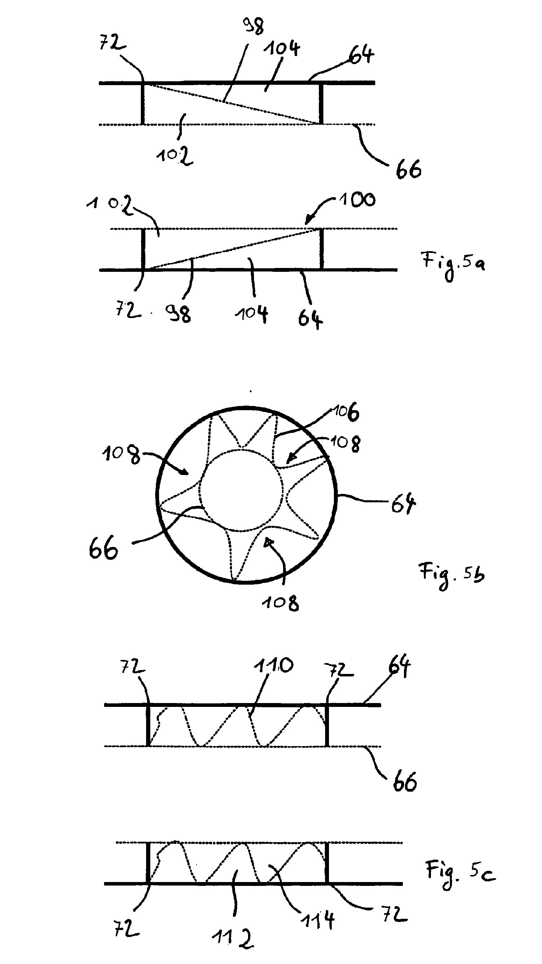

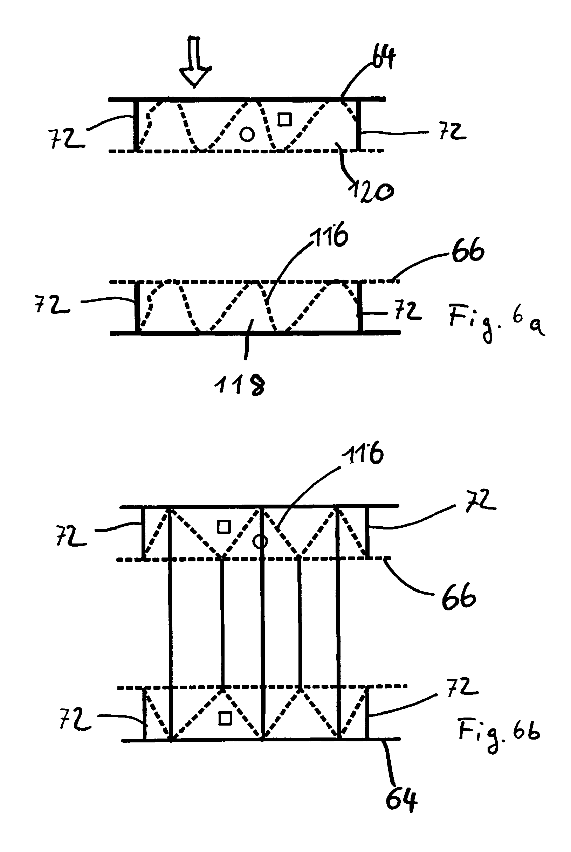

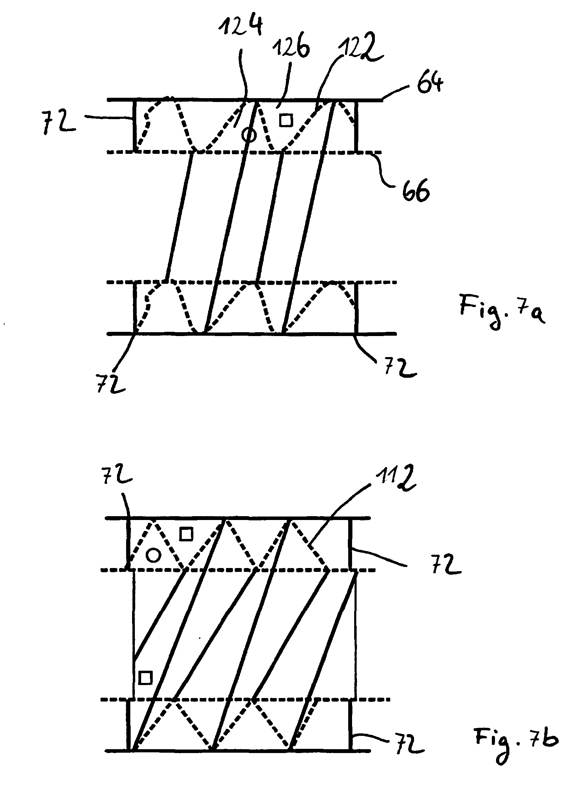

Die konkrete Ausgestaltung und der Verlauf der porösen Absorberschicht 78 kann auf vielfältige Weise realisiert werden, wie anhand von verschiedenen Ausführungsbeispielen in den Fig. 5a bis 5c, sowie in den Fig. 6a, 6b, 7a und 7b zu sehen ist.

In Fig. 5a verläuft eine poröse Absorberschicht 98 konisch zwischen dem Gehäuse 64 und dem Strömungskanal 66, die äußere Zelle 100 wird dabei in einen Innenbereich 42 und einen Außenbereich 104 unterteilt. Der Außenbereich 104 der äußeren Zelle 100 ist nicht in der Lage, direkt mit dem Strömungskanal 66 zu kommunizieren, sondern es ist lediglich eine Kommunikation mit dem betreffenden Innenbereich 102 der äußeren Zelle 100 über die poröse Absorberschicht 98 möglich.

Eine Absorberschicht 106 aus Fig. 5b weist hingegen eine völlig andere Form auf, als in Fig. 5a gezeigt. Hier bildet die Absorberschicht 106 teilzylindrische Abschnitte 108, die sich von der Wandung des Strömungskanals 66 parallel zur Erstreckungsrichtung des erfindungsgemäßen Schalldämpfers 62 zum Gehäuse 64 erstrecken. Hierbei ist anzumerken, dass zylindrisch nicht unbedingt kreiszylindrisch bedeutet, sondern beispielsweise auch elliptisch-zylindrisch sein könnte.

In Fig. 5c hingegen ist eine Absorberschicht 110 gezeigt, die zwischen dem Gehäuse 64 und der Wandung des Strömungskanals 66 ringförmige Außenbereiche 112 und ringförmige Innenbereiche 114 bereitstellt. Die konkrete Ausgestaltung lässt dabei zahlreiche Variationen offen, so dass die Absorberschicht 110 im Längsschnitt des Schalldämpfers 62 wellenförmig, eckig und dergleichen ausgeformt sein könnte.

Das Ausführungsbeispiel aus den Fig. 6a und 6b zeigt eine Absorberschicht 116, die ringförmige Außenbereiche 118 und ringförmige Innenbereiche 120 in dem Zwischenraum zwischen Strömungskanal 66 und Gehäuse 64 bildet. Die Darstellung aus Fig. 6b entsteht bei Betrachtung der Fig. 6a aus der dort angegebenen Pfeilrichtung. Zur Kenntlichmachung des Verlaufs der Innenbereiche 120 und der Außenbereiche 118 sind Quadrate bzw. Kreise in die jeweilige Darstellung eingezeichnet, die jeweils den Innenbereich 120 (Kreis) oder den Außenbereich 118 (Quadrat) repräsentieren.

In den Fig. 7a und 7b wird eine Absorberschicht 122 gezeigt, die im Wesentlichen ähnlich aufgebaut ist wie die Absorberschicht 116 der Fig. 6a und 6b, wobei sich in den Fig. 7a und 7b jedoch eine Helix bzw. Schraubenform der Innenbereiche 124 und der Außenbereiche 126 in dem Zwischenraum ergibt, der sich von dem Strömungskanal 66 bis zu dem Gehäuse 4 erstreckt.

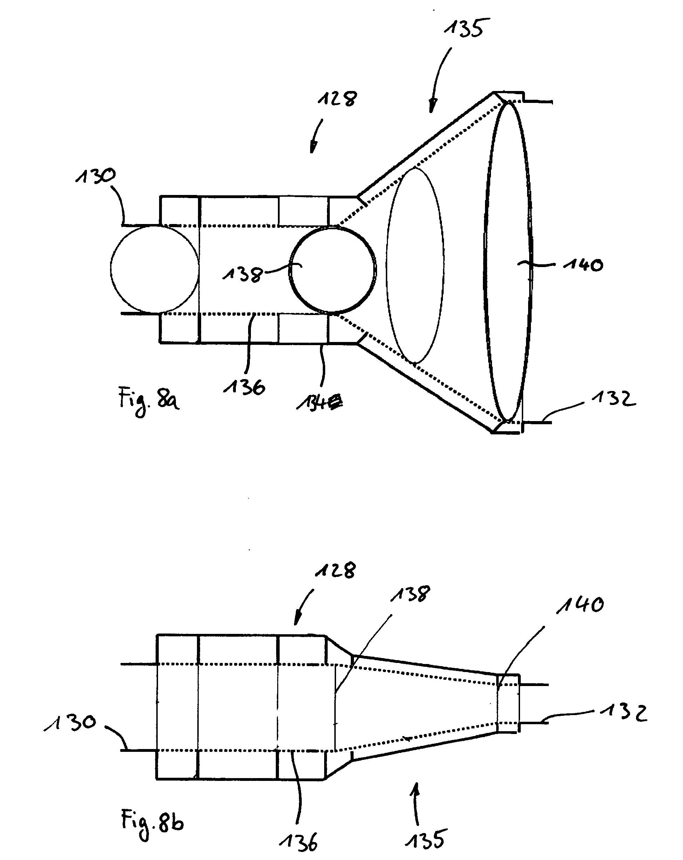

Der in den Fig. 8a und 8b gezeigte erfindungsgemäße Schalldämpfer 128 weist einen Einlass 130, einen Auslass 132 und ein Gehäuse 134 auf, in dem ein Strömungskanal 136 angeordnet ist. Der Querschnitt des mit dem Auslass 132 verbundenen Endes des Strömungskanals 136 und des damit korrespondierenden Abschnitts des Gehäuses 134 geht kontinuierlich von einer ersten Form 138 in eine zweite Form 140 über, wobei in der ersten Form 138 jeder Punkt im Querschnitt des Strömungskanals 136 einen Abstand zu einem nächstgelegenen Außenkonturpunkt des Gehäuses 134 aufweist, der höchstens dem halben hydraulischen Durchmesser des Strömungskanals 136 bei der ersten Form 138 entspricht und wobei in der zweiten Form jeder Punkt im Querschnitt des Strömungskanals 136 einen Abstand zu einem nächstgelegenen Außenkonturpunkt des Gehäuses 134 aufweist, der höchstens einem Viertel des hydraulischen Durchmessers des Strömungskanals 136 bei der ersten Form 138 entspricht. Dieser Bereich könnte in Form eines verlängerten Bauteils 135 realisiert sein. Zwischen dem Gehäuse 134 und dem Strömungskanal 136 des verlängerten Bauteils 135 könnte ein Wabenkernmaterial angeordnet sein, das die Schalldämpfung verbessert.

In Fig. 8b zeigt sich anhand der Draufsicht auf den erfindungsgemäßen Schalldämpfer 128, dass dabei die Breite 142 des verlängerten Bauteils 135 kontinuierlich oder in Stufen sinken könnte. Der zum Auslass 132, also stromabwärts, gewandte Abschnitt des erfindungsgemäßen Schalldämpfers 128 weist demnach ansatzweise die Form eines Fischschwanzes auf.

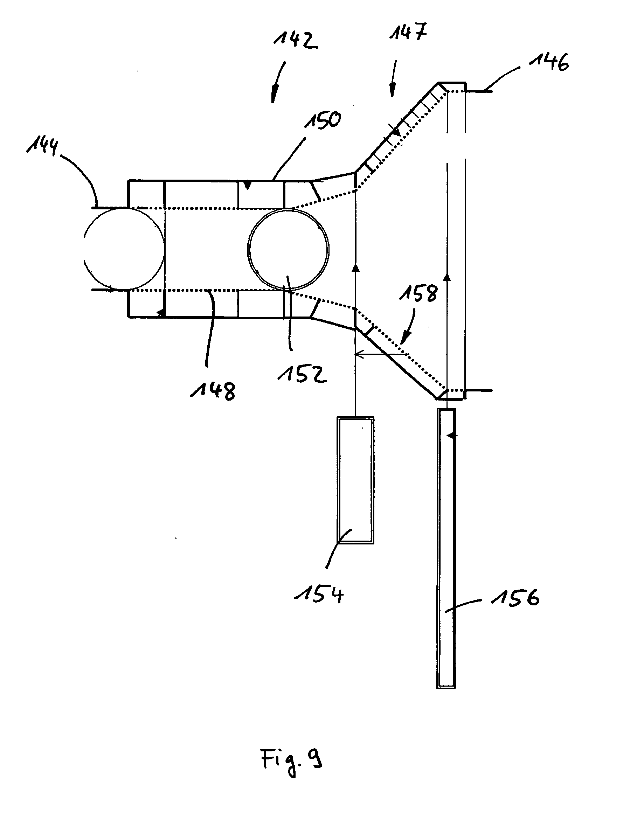

In Fig. 9 ist ein weiteres Ausführungsbeispiel 142 eines erfindungsgemäßen Schalldämpfers gezeigt, der einen Einlass 144 und einen Auslass 146 aufweist, zwischen denen sich ein Strömungskanal 148 erstreckt. Der Querschnitt des Strömungskanals im Bereich des Auslasses 146 etwa in Form eines verlängerten Bauteils 147 sowie das diesen Bereich des Strömungskanals 148 umgebende Gehäuse 150 ändern ebenfalls kontinuierlich ihren Querschnitt, wobei der Querschnitt von einer ersten Form 152 in eine zweite Form 154 übergeht, um dann im Bereich des Auslasses 146 eine dritte Form 156 zu erreichen.

Exemplarisch ist der Querschnitt des Strömungskanals 148 im Bereich der ersten Form 152 kreisförmig gewählt, während der Strömungskanal 148 exemplarisch im Bereich der zweiten Form 154 und der dritten Form 156 rechteckig ausgeformt ist. Beispielhaft bildet der Strömungskanal 148 zwischen der zweiten Form 154 und der dritten Form 156 gerade Wandflächen 158 aus.

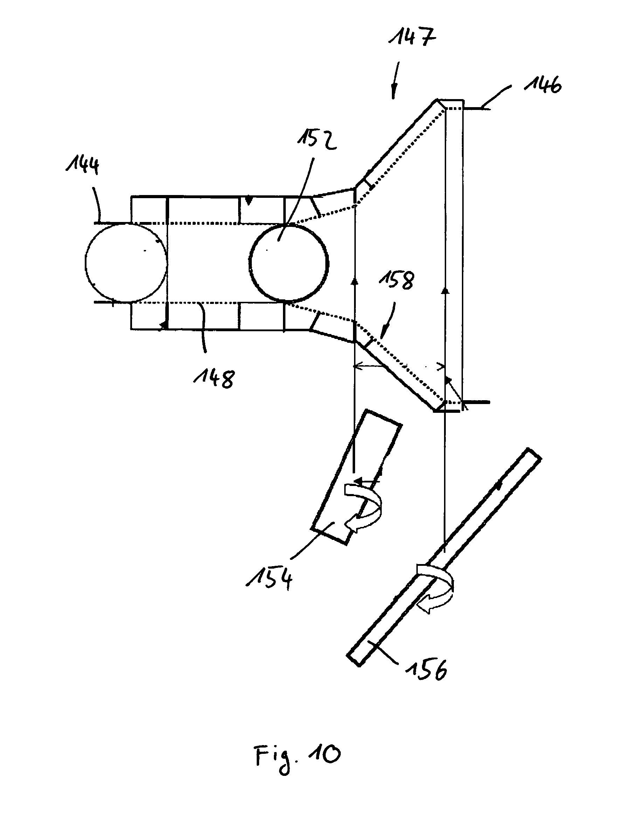

Fig. 10 zeigt das Ausführungsbeispiel aus Fig. 9, bei dem jedoch die Hauptachsen der zweiten Form 154 und der dritten Form 156 gegenüber der ersten Form 152 verdreht sind. Die Hauptachsen könnten derart verdreht werden, dass der Auslass nach unten, nach oben oder zur Seite zeigt.

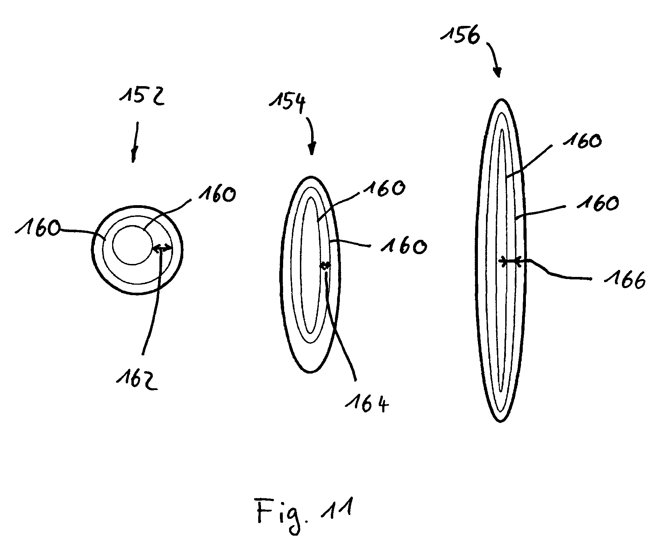

In Fig. 11 werden deformierte Radialmoden gezeigt, die jeweils in einem Bereich einer ersten Form 152, einer zweiten Form 154 und einer dritten Form 156 vorliegen. Es sind auf anschauliche Weise mehrere Knotenlinien 160 gezeigt, deren Abstände 162, 164 und 166 zueinander verringert werden, je weiter die betreffenden Schallwellen zum Ende eines Schalldämpfers mit einer Gestaltung nach den Figuren 8a bis 10.

Im Bereich der ersten Form 152 ist der Abstand 162 zwischen den Knotenlinien 160 relativ groß, wohingegen in der dritten Form 156 der Abstand 166 zwischen den Knotenlinien 160 ungefähr dem halben Abstand 162 in dem Bereich der ersten Form 152 entsprechen könnte. Dieser Abstand 166 könnte konkret geringer als eine halbe Wellenlänge sein, so dass die Ausbreitung der Schallwellen in diesen hinteren Bereich des Schalldämpfers im Ausmaß verringert oder gänzlich verhindert werden kann. Die Mittelpunkte der Geräuschfelder sind näher an der absorbierenden Wand des Gehäuses 134 bzw. 150.

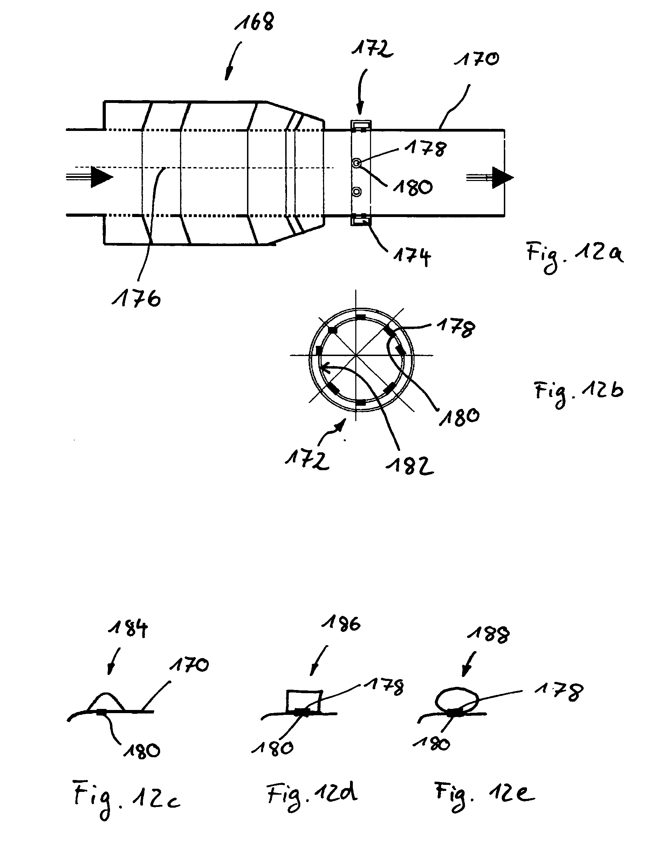

In Fig. 12a wird eine Weiterentwicklung eines erfindungsgemäßen Schalldämpfers gezeigt. Ein exemplarisch dargestellter Schalldämpfer 168, dessen Form und innerer Aufbau in Bezug auf die vorzustellende Weiterentwicklung des Schalldämpfers in den folgenden Figuren vollkommen unerheblich ist, weist einen verlängerten Auslass 170 auf, an dem ein ringförmiger Kanal 172 angeordnet ist. Der ringförmige Kanal 172 könnte exemplarisch aus der Rotation einer beliebig geformten Fläche, die den Normalquerschnitt 174 bildet, um eine Längsachse 176 des Schalldämpfers 168 entstehen.

Gemäß Fig. 12b weist der ringförmige Kanal 172 mehrere Öffnungen 178 auf, die mit geeigneten Öffnungen 180 des Auslasses 170 korrespondieren. Der Einfachheit halber werden in Fig. 12b jeweils überlappende Öffnungen 178 und 180 des Auslasses 170 dargestellt. Es ist im Folgenden unerheblich, wie die Öffnungen 178 und 180 ausgestaltet sind, es muss lediglich sichergestellt werden, dass eine Verbindung von dem Auslass 170 in den ringförmigen Kanal 172 geschaffen werden kann.

Beispielhaft sind die Öffnungen 178 bzw. 180 gleichmäßig über einen inneren Umfang 182 des ringförmigen Kanals 172 verteilt. Hierbei sollte sichergestellt werden, dass sich in zwei benachbarten Öffnungen 178 des ringförmigen Kanals 172 jeweils Phase und Gegenphase einer Eigenschwingung einer ersten Radialmode abwechseln. Alternativ dazu können auch andere Muster von Phasen und Gegenphasen realisiert werden, bei denen die betreffenden Öffnungen 178 nicht unbedingt direkte Nachbarn sein müssen. Dementsprechend ist es als vorteilhaft zu werten, wenn eine gerade Anzahl von Öffnungen 178 an dem ringförmigen Kanal 172 angeordnet sind.

Die Fläche des Normalquerschnitts 174 des ringförmigen Kanals 172 ist hierbei derart ausgelegt, dass sich eine Schwingung in einem Bereich zwischen zwei benachbarten Öffnungen 178 in dem ringförmigen Kanal 172 so ausbreitet, dass die auf die benachbarte Öffnung 178, oder die weitere korrespondiere Öffnung 178, aus dem ringförmigen Kanal 172 treffende Schwingung um eine halbe Schwingungsperiode vorauseilt, so dass an jeder Öffnung eine Phase auf eine Gegenphase trifft und sich so die Schwingungserscheinungen möglichst aufheben. Wie in Fig. 12c, d und e dargestellt, ist die Querschnittsform des ringförmigen Kanals 172 im Prinzip unerheblich. In Fig. 12c wird ein ringförmiger Kanal 184 gezeigt, der einen annähernd dreiecksförmigen Querschnitt aufweist, wobei der Querschnitt auch auf einer zum Auslass 170 ragenden Seite geöffnet sein kann. Es ist dementsprechend keine separate Öffnung 178 in dem ringförmigen Kanal 184 notwendig, da die Öffnung 180 in dem Auslass 170 zur Kommunikation mit dem ringförmigen Kanal 184 ausreicht.

In Fig. 12d wird ein ringförmiger Kanal 186 dargestellt, der einen rechteckigen, geschlossenen Querschnitt aufweist.

In Fig. 12e ist weiterhin ein ovaler bzw. elliptischer ringförmiger Kanal 188 gezeigt, wobei noch eine wesentlich größere Anzahl von unterschiedlichen Querschnittsformen möglich sind, wobei die gezeigten Querschnittsformen nicht zur Beschränkung der Erfindung herangezogen werden sollen.

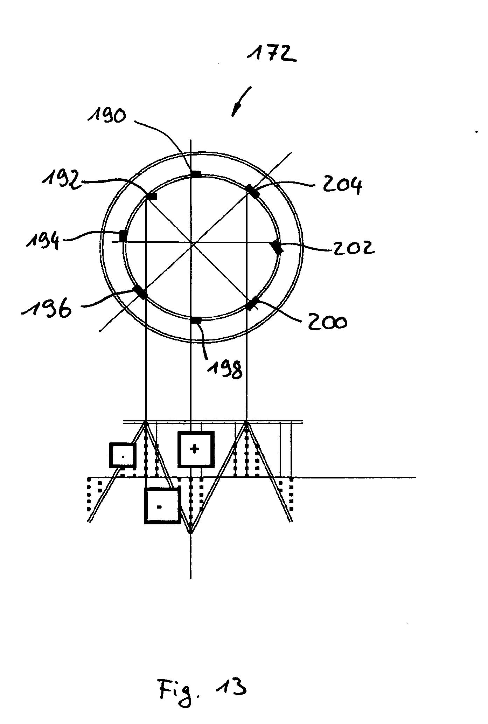

Die Verteilung des Drucks in der ersten Radialmode wird in Fig. 13 gezeigt. Bei Resonanz sind die Druckschwingungen in allen Punkten 190 bis 204 in Phase. Durch die beispielhaft betrachtete Öffnung 190 des ringförmigen Kanals 172 wird eine Schwingung innerhalb des ringförmigen Kanals 172 angeregt und erreicht den benachbarten Punkt 192 mit einer Phase, die von dem Abstand zwischen den Öffnungen 190 und 192 abhängt. Durch die Öffnung 192 erreicht die angeregte Schwingung wieder den Auslass 170. Der Abstand zwischen den Öffnungen 190 und 192 berechnet sich gemäß folgender Formel, die eine Anzahl von 8 Öffnungen 190-204 berücksichtigt:

$$L_{190-192} = \pi \cdot \frac{D}{8},$$

wobei D der Durchmesser des Auslasses 170 ist.

Die Phasenverschiebung berechnet sich dementsprechend gemäß

$$Fi_{190-192} = \frac{2\pi \cdot F_{1R} \cdot L_{190-192}}{c},$$

wobei $F_{1R}$ die kritische Frequenz ist und c die Schallgeschwindigkeit. Die kritische Frequenz berechnet sich aus

$$F_{1R} = \frac{1{,}22 \cdot c}{D},$$

so dass die Phasenverschiebung zu

$$Fi_{190-192} = \frac{2{,}44\pi^2}{8} = 3{,}01 rad \approx \pi,$$

berechnet wird. Dies bedeutet, dass die Schwingung aus den ringförmigen Kanal 172 aus der Öffnung 192 in den Auslass 170 mit einer ungefähr entgegengesetzten Phase, das heißt $Fi_{190-192}$ ungefähr $\pi$ erreicht und damit die Schwingung der Radialmode aufhebt.

Eine ähnliche Interferenz wird ebenso für das Geräusch aus anderen Öffnungen 204, 202 und dergleichen erreicht und so wird die Radialmode innerhalb des Auslasses 170 gedämpft.

Die Anzahl von insgesamt 8 Öffnungen 178 bzw. 180 ist dementsprechend als besonders vorteilhaft für die in den Figuren 12a bis 13 gezeigte Weiterentwicklung eines erfindungsgemäßen Schalldämpfers zu werten.

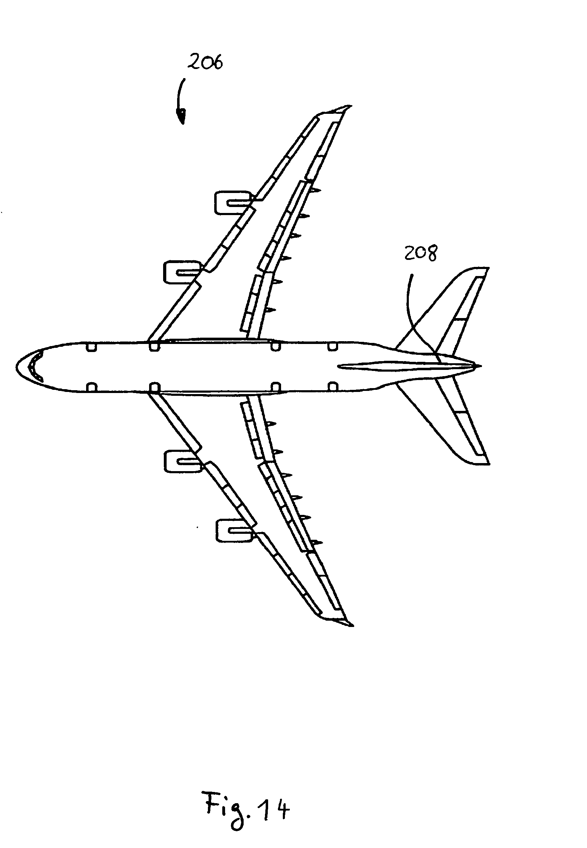

Schließlich zeigt Fig. 14 ein Flugzeug 206, das ein Hilfstriebwerk 208 aufweist, welches mit einem erfindungsgemäßen Schalldämpfer ausgerüstet ist. Durch die grundlegende Form und den inneren Aufbau eines erfindungsgemäßen Schalldämpfers gemäß einem der obigen Ausführungsbeispiele kann eine besonders kompakte Form bei dennoch sehr guten Schalldämmeigenschaften realisiert werden. Gleichzeitig kann durch eine spezielle Formgebung des hinteren Endes des Schalldämpfers in Form eines Fischschwanzes eine besonders gute Anpassung an eine Hecksektion des Flugzeugs erreicht werden. Schließlich wird durch Anbringen eines ringförmigen Kanals an einem verlängerten Auslass eines beliebig ausgeformten Schalldämpfers eine weitere Verbesserung des Schalldämmverhaltens erreicht.

Der erfindungsgemäße Schalldämpfer könnte abweichend von den vorangehend erörterten Ausführungsbeispielen auch in Form folgender Beispiele ausgeführt sein:

1. Beispiel: Ein Schalldämpfer für ein Hilfstriebwerk eines Flugzeugs weist einen Einlass, einen Auslass, ein Gehäuse und einen in dem Gehäuse angeordneten Strömungskanal auf, wobei zwischen dem Gehäuse und dem Strömungskanal ein Zwischenraum gebildet ist, der mittels einer oder mehrerer Partitionen in um den Strömungskanal herum angeordnete äußere Zellen unterteilt ist und wobei das Wandmaterial des Strömungskanals porös ist, wobei die Partitionen derart zueinander angeordnet sind, dass mindestens zwei äußere Zellen mit einer jeweiligen Länge, die dem 0,2-0,6-fachen hydraulischen Durchmesser des Strömungskanals entspricht und einer jeweiligen Höhe, die dem 0,3-0,45-fachen hydraulischen Durchmesser des Strömungskanals entspricht, in dem Zwischenraum zwischen dem Gehäuse und dem Strömungskanal in einem zylindrischen Abschnitt des Gehäuses gebildet sind und wobei mindestens eine äußere Zellen in dem zylindrischen Abschnitt des Gehäuses durch eine poröse Absorberschicht in einen Außenbereich und einen Innenbereich unterteilt ist, wobei der Außenbereich nicht direkt mit dem Strömungskanal kommuniziert.

2. Beispiel: Ein Schalldämpfer nach dem 1. Beispiel, bei dem das Gehäuse zumindest in einem Abschnitt konisch ausgeformt ist.

3. Beispiel: Ein Schalldämpfer nach dem 1. oder dem 2. Beispiel, bei dem die Summe der Volumina aller Außenbereiche mindestens einer äußeren Zelle in dem zylindrischen Abschnitt des Gehäuses dem 0,8-1,2-fachen der Summe der Volumina aller Innenbereiche derselben äußeren Zelle entspricht.

4. Beispiel: Ein Schalldämpfer nach dem 1. Beispiel, bei dem die Partitionen in dem zylindrischen Abschnitt des Gehäuses derart zueinander angeordnet sind, dass zumindest zwei Gruppen von äußeren Zellen in dem Zwischenraum zwischen dem zylindrischen Abschnitt des Gehäuses und dem Strömungskanal gebildet werden, wobei äußere Zellen einer ersten Gruppe jeweils eine Länge aus einem ersten Intervall aufweisen und äußere Zellen einer zweiten Gruppe jeweils eine Länge aus einem zweiten Intervall aufweisen, wobei das erste und das zweite Intervall zueinander benachbart sind und jeweils eine Breite aufweisen, die im Wesentlichen dem 0,1-fachen des hydraulischen Durchmessers des Strömungskanals entspricht.

5. Beispiel: Ein Schalldämpfer nach dem 4. Beispiel, bei dem die erste Gruppe von äußeren Zellen eine Länge aufweist, die dem 0,3-0,4-fachen des hydraulischen Durchmessers des Strömungskanals entspricht.

6. Beispiel: Ein Schalldämpfer nach dem 4. oder 5. Beispiel, bei dem die zweite Gruppe von äußeren Zellen eine Länge aufweist, die dem 0,4-0,5-fachen des hydraulischen Durchmessers des Strömungskanals entspricht.

7. Beispiel: Ein Schalldämpfer nach einem der Beispiele 4 bis 6, bei dem eine zusätzliche dritte Gruppe von äußeren Zellen eine Länge aufweist, die dem 0,2-0,3-fachen des hydraulischen Durchmessers des Strömungskanals entspricht.

8. Beispiel: Ein Schalldämpfer nach einem der vorhergehenden Beispiele, bei dem das Wandmaterial des Strömungskanals einen Strömungswiderstand aufweist, der dem 0,8- bis 1,2-fachen eines Grundwiderstands entspricht, der sich durch

$$R = 410 \cdot \left(\frac{293}{T}\right)^{1,26} \frac{Pa}{\frac{m}{s}}$$

berechnet, wobei T die Temperatur in Kelvin (K) des durch den Schalldämpfer strömenden Gases ist.

9. Beispiel: Ein Schalldämpfer nach einem der vorhergehenden Beispiele, bei dem mindestens eine Partition jeweils mindestens ein Drainageloch aufweist.

10. Beispiel: Ein Schalldämpfer nach einem der vorhergehenden Beispiele, bei dem die poröse Absorberschicht in dem zylindrischen Abschnitt des Gehäuses derart ausgebildet ist, dass die Außenbereiche der äußeren Zellen schraubenförmig um die Innenbereiche der äußeren Zellen herum verlaufen.

11. Beispiel: Ein Schalldämpfer nach einem der vorhergehenden Beispiele, wobei die poröse Absorberschicht in dem zylindrischen Abschnitt des Gehäuses derart ausgebildet ist, dass die Außenbereiche der äußeren Zellen ringförmig um oder neben den Innenbereichen der äußeren Zellen herum verlaufen.

Schließlich kann auch jeglicher im Stand der Technik bekannte Schalldämpfer mit einer beliebigen Bauform mit einem verlängerten Auslass und einen zusätzlichen ringförmigen Kanal ausgestattet werden, um eine verbesserte Schalldämpfung zu erreichen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

BEZUGSZEICHEN

| 2 | Schalldämpfer |
|---|---|
| 3 | zylindrische Gehäusekomponente |
| 4 | Gehäuse |
| 5 | konische Gehäusekomponente |
| 6 | Strömungskanal |
| 8 | Partition |
| 10 | äußere Zelle |
| 12 | äußere Zelle |
| 14 | äußere Zelle |
| 16 | äußere Zelle |
| 18 | äußere Zelle |
| 20 | äußere Zelle |
| 22 | äußere Zelle |
| 24 | äußere Zelle |
| 26 | äußere Zelle |
| 28 | innere Zelle |
| 30 | innere Zelle |
| 32 | innere Zelle |
| 34 | innere Zelle |
| 36 | innere Zelle |
| 38 | innere Zelle |
| 40 | innere Zelle |
| 42 | innere Zelle |
| 44 | innere Zelle |
| 46 | Einlass |
| 48 | Auslass |
| 49 | Drainageloch |
| 50 | Zelle |
| 52 | innere Zelle |
| 54 | äußere Zelle |
| 56 | erstes Intervall einer ersten Gruppe |
| 58 | zweites Intervall einer zweiten Gruppe |
| 60 | drittes Intervall einer dritten Gruppe |
| 62 | Schalldämpfer |
| 64 | Gehäuse |
| 66 | Strömungskanal |
| 68 | Einlass |
| 70 | Auslass |
| 72 | Partition |

| 74  | innere Zelle |
| --- | --- |
| 76  | äußere Zelle |
| 78  | poröse Absorberschicht |
| 80  | Außenbereich |
| 82  | Innenbereich |
| 84  | äußere Zelle |
| 85  | äußere Zelle |
| 86  | Länge äußerer Zelle |
| 87  | äußere Zelle |
| 88  | hydraulischer Durchmesser |
| 90  | Höhe äußerer Zelle |
| 92  | Bereich mit zylindrischer Ausformung |
| 94  | Bereich mit konischer Ausformung |
| 96  | Drainageloch |
| 98  | poröse Absorberschicht |
| 100 | äußere Zelle |
| 102 | Innenbereich |
| 104 | Außenbereich |
| 106 | poröse Absorberschicht |
| 108 | Außenbereich |
| 110 | poröse Absorberschicht |
| 112 | Außenbereich |
| 114 | Innenbereich |
| 116 | poröse Absorberschicht |
| 118 | Außenbereich |
| 120 | Innenbereich |
| 122 | poröse Absorberschicht |
| 124 | Innenbereich |
| 126 | Außenbereich |
| 128 | Schalldämpfer |
| 130 | Einlass |
| 132 | Auslass |
| 134 | Gehäuse |
| 135 | verlängertes Bauteil |
| 136 | Strömungskanal |
| 138 | Erste Form |
| 140 | Zweite Form |
| 142 | Schalldämpfer |
| 144 | Einlass |
| 146 | Auslass |
| 147 | verlängertes Bauteil |
| 148 | Strömungskanal |
| 150 | Gehäuse |
| 152 | Erste Form |
| 154 | Zweite Form |
| 156 | Dritte Form |
| 158 | Abschnitt |
| 160 | Knotenlinie |
| 162 | Abstand |
| 164 | Abstand |
| 166 | Abstand |
| 168 | Schalldämpfer |
| 170 | Auslass |
| 172 | ringförmiger Kanal |
| 174 | Normalquerschnitt |
| 176 | Längsachse |
| 178 | Öffnung |
| 180 | Öffnung |

182 innerer Umfang
184 ringförmiger Kanal
186 ringförmiger Kanal
188 ringförmiger Kanal
190 Öffnung
192 Öffnung
194 Öffnung
196 Öffnung
198 Öffnung
200 Öffnung
202 Öffnung
204 Öffnung
206 Flugzeug
208 APU

**Patentansprüche**

1. Schalldämpfer (2, 62, 128, 142, 168) für ein Hilfstriebwerk eines Flugzeugs, aufweisend

   - einen Einlass (46, 68, 130, 144),
   - einen Auslass (48, 70, 132, 146, 170),
   - ein Gehäuse (4, 64, 134, 150) und
   - einen in dem Gehäuse (4, 64, 134, 150) angeordneten Strömungskanal (6, 66, 136, 148),

   wobei zwischen dem Gehäuse (4, 64, 134, 150) und dem Strömungskanal (6, 66, 136, 148) ein Zwischenraum gebildet ist, der mittels einer oder mehrerer Partitionen (8, 72) in um den Strömungskanal (6, 66, 136, 148) herum angeordnete äußere Zellen (10-26, 54, 76, 84, 85, 87, 100) unterteilt ist, wobei das Wandmaterial des Strömungskanals (6, 66, 136, 148) porös ist und wobei der Strömungskanal (6, 66, 136, 148) derart dimensioniert ist, dass im Bereich der Wand des Strömungskanals (6, 66, 136, 148) die radialen Geschwindigkeitsanteile zumindest einer ersten und einer zweiten in dem Schalldämpfer gebildeten Transversalmode ein gemeinsames Maximum aufweisen, um eine möglichst gute Dissipation durch das Wandmaterial zu ermöglichen.

2. Schalldämpfer (2, 62, 128, 142, 168) nach Anspruch 1,
   wobei die Partitionen (8, 72) derart zueinander angeordnet sind, dass zumindest zwei Gruppen von äußeren Zellen (10-26, 54, 76, 84, 85, 87, 100) in dem Zwischenraum zwischen dem Gehäuse (4, 64, 134, 150) und dem Strömungskanal (6, 66, 136, 148) gebildet werden, wobei äußere Zellen (10-26, 54, 76, 84, 85, 87, 100) einer ersten Gruppe jeweils eine Länge aus einem ersten Intervall aufweisen und äußere Zellen (10-26, 54, 76, 84, 85, 87, 100) einer zweiten Gruppe jeweils eine Länge aus einem zweiten Intervall aufweisen, wobei das erste und das zweite Intervall zueinander benachbart sind und jeweils eine Breite aufweisen, die im Wesentlichen dem 0,1-fachen des hydraulischen Durchmessers des Strömungskanals (6, 66, 136, 148) entspricht, und dass die äußeren Zellen (10-26, 54, 76, 84, 85, 87, 100) ein Volumen aufweisen, die einem 1,0-1,2-fachen Volumen von inneren Zellen (28-44, 52, 74) entsprechen, die von den jeweiligen äußeren Zellen (10-26, 54, 76, 84, 85, 87, 100) umgeben und in dem Strömungskanal (6, 66, 136, 148) gebildet sind.

3. Schalldämpfer (2, 62, 128, 142, 168) nach Anspruch 1 oder 2, wobei der Schalldämpfer (2, 62, 128, 142, 168) zum Dämpfen hochfrequenter Geräusche zusätzliche äußere Zellen (10-26, 54, 76, 84, 85, 87, 100) umfasst, die ein Volumen aufweisen, die einem 0,75-0,85-fachen Volumen der inneren Zellen (28-44, 52, 74) entsprechen, die von den jeweiligen äußeren Zellen (10-26, 54, 76, 84, 87, 100) umgeben und in dem Strömungskanal (6, 66, 136, 148) gebildet sind.

4. Schalldämpfer (2, 62, 128, 142, 168) nach Anspruch 2,
   wobei die erste Gruppe von äußeren Zellen (10-26, 54, 76, 84, 100) eine Länge aufweist, die dem 0,3-0,4-fachen des hydraulischen Durchmessers (88) des Strömungskanals (6, 66, 136, 148) entspricht.

5. Schalldämpfer (2, 62, 128, 142, 168) nach Anspruch 2, wobei die zweite Gruppe von äußeren Zellen (10-26, 54, 76, 84, 100) eine Länge aufweist, die dem 0,4-0,5-fachen des hydraulischen Durchmessers (88) des Strömungskanals (6, 66, 136, 148) entspricht.

**6.** Schalldämpfer (2, 62, 128, 142, 168) nach Anspruch 2, 4 oder 5, wobei eine zusätzliche dritte Gruppe von äußeren Zellen (10-26, 54, 76, 84, 100) eine Länge aufweist, die dem 0,2-0,3-fachen des hydraulischen Durchmessers (88) des Strömungskanals (6, 66, 136, 148) entspricht.

**7.** Schalldämpfer (2, 62, 128, 142, 168) nach einem der vorhergehenden Ansprüche, wobei der Querschnitt des Strömungskanals (6, 66, 136, 148) und mindestens eines Abschnitts des den Strömungskanal (6, 66, 136, 148) umgebenden Gehäuses (4, 64, 134, 150) kontinuierlich von einer ersten Form in eine zweite Form übergeht, wobei in der ersten Form jeder Punkt im Querschnitt des Strömungskanals (6, 66, 136, 148) einen Abstand zu einem nächstgelegenen Außenkonturpunkt des Gehäuses (4, 64, 134, 150) aufweist, der höchstens dem halben hydraulischen Durchmesser der ersten Form entspricht und wobei in der zweiten Form jeder Punkt im Querschnitt des Strömungskanals (6, 66, 136, 148) einen Abstand zum nächstgelegenen Außenkonturpunkt des Gehäuses (4, 64, 134, 150) aufweist, der höchstens einem Viertel des hydraulischen Durchmessers der ersten Form entspricht.

**8.** Schalldämpfer (2, 62, 128, 142, 168) nach einem der vorhergehenden Ansprüche, ferner aufweisend einen auf einen verlängerten Auslass (48, 70, 132, 146, 170) aufgesetzten ringförmigen Kanal, der über mindestens eine an dem Auslass (48, 70, 132, 146, 170) angeordnete Öffnung mit dem Auslass (48, 70, 132, 146, 170) kommuniziert.

**9.** Schalldämpfer (2, 62, 128, 142, 168) nach Anspruch 8, aufweisend eine Mehrzahl von Öffnungen, die derart an einem inneren Umfang des ringförmigen Kanals angeordnet sind, dass sich eine durch eine Öffnung in den ringförmigen Kanal eintretende Schallwelle ausbreiten und eine benachbarte Öffnung erreichen kann, wobei die aus dem Auslass (48, 70, 132, 146, 170) in den ringförmigen Kanal über die benachbarte Öffnung eintretende Schallwelle eine Gegenphase zu der in dem ringförmigen Kanal ausgebreiteten Schallwelle aufweist und sich die Phase und Gegenphase an der benachbarten Öffnung aufheben.

**10.** Schalldämpfer (2, 62, 128, 142, 168) nach Anspruch 8 oder 9, bei dem der ringförmige Kanal über 8 gleichmäßig über den Auslass (48, 70, 132, 146, 170) verteilte Öffnungen mit dem Auslass (48, 70, 132, 146, 170) kommuniziert.

**11.** Flugzeug (74) mit mindestens einem Hilfstriebwerk (76) und mindestens einem Schalldämpfer (2, 62, 128, 142, 168) nach einem der Ansprüche 1-10 für das Hilfstriebwerk (76).

**Claims**

**1.** A silencer (2, 62, 128, 142, 168) for an auxiliary power unit of an aircraft, comprising

- an inlet (46, 68, 130, 144),
- an outlet (48, 70, 132, 146, 170),
- a housing (4, 64, 134, 150) and
- a flow channel (6, 66, 136, 148) that is arranged in the housing (4, 64, 134, 150),

wherein an intermediate space is formed between the housing (4, 64, 134, 150) and the flow channel (6 , 66, 136, 148) and divided into outer cells (10-26, 54, 76, 84, 85, 87, 100) that are arranged around the flow channel (6 , 66, 136, 148) by means of one or more partitions (8, 72), wherein the wall material of the flow channel (6 , 66, 136, 148) is porous, and

wherein the flow channel (6, 66, 136, 148) is dimensioned such that the radial velocity components of at least a first and a second transversal mode created in the silencer have a common maximum in the region of the wall of the flow channel (6 , 66, 136, 148) in order to allow a best dissipation through the wall material as possible.

**2.** The silencer (2, 62, 128, 142, 168) of claim 1,

wherein the partitions (8, 72) are arranged relative to one another in such a way that at least two groups of outer cells (10-26, 54, 76, 84, 85, 87, 100) are formed in the intermediate space between the housing (4, 64, 134, 150) and the flow channel (6, 66, 136, 148), wherein outer cells (10-26, 54, 76, 84, 85, 87, 100) of a first group respectively have a length comprised of a first interval and outer cells (10-26, 54, 76, 84, 85, 87, 100) of a second group respectively have a length comprised of a second interval, wherein the first and the second interval are adjacent to one another and respectively have a width that essentially corresponds to 0.1-times the hydraulic diameter of the flow channel (6, 66, 136, 148), and wherein the outer cells (10-26, 54, 76, 84, 85, 87, 100) have a volume that corresponds to 1.0-1.2-times the volume of inner cells (28-44, 52, 74) that are enclosed by the respective outer cells (10-26, 54, 76, 84, 85, 87, 100) and formed in the flow channel (6, 66, 136, 148).

3. The silencer (2, 62, 128, 142, 168) of claim 1 or 2, wherein the silencer (2, 62, 128, 142, 168) comprises additional outer cells (10-26, 54, 76, 84, 85, 87, 100) in order to dampen high-frequency noises, and wherein these additional outer cells have a volume that corresponds to 0.75-0.85-times the volume of inner cells (28-44, 52, 74) that are enclosed by the respective outer cells (10-26, 54, 76, 84, 85, 87, 100) and formed in the flow channel (6, 66, 136, 148).

4. The silencer (2, 62, 128, 142, 168) of claim 2, wherein the first group of outer cells (10-26, 54, 76, 84, 100) has a length that corresponds to 0.3-0.4-times the hydraulic diameter (88) of the flow channel (6, 66, 136, 148).

5. The silencer (2, 62, 128, 142, 168) of claim 2, wherein the second group of outer cells (10-26, 54, 76, 84, 100) has a length that corresponds to 0.4-0.5-times the hydraulic diameter (88) of the flow channel (6, 66, 136, 148).

6. The silencer (2, 62, 128, 142, 168) of claim 2, 4 or 5, wherein an additional third group of outer cells (10-26, 54, 76, 84, 100) has a length that corresponds to 0.2-0.3-times the hydraulic diameter (88) of the flow channel (6, 66, 136, 148).

7. The silencer (2, 62, 128, 142, 168) of one of the preceding claims, wherein the cross section of the flow channel (6, 66, 136, 148) and of at least one section of the housing (4, 64, 134, 150) that surrounds the flow channel (6, 66, 136, 148) continuously changes from a first shape to a second shape, wherein each point in the first cross-sectional shape of the flow channel (6, 66, 136, 148) is spaced apart from a nearest outer contour point of the housing (4, 64, 134, 150) by a distance that corresponds to no more than half the hydraulic diameter of the first shape, and wherein each point in the second cross-sectional shape of the flow channel (6, 66, 136, 148) is spaced apart from a nearest outer contour point of the housing (4, 64, 134, 150) by a distance that corresponds to no more than one-fourth the hydraulic diameter of the first shape.

8. The silencer (2, 62, 128, 142, 168) of one of the preceding claims, furthermore comprising an annular channel that is placed on an elongated outlet (48, 70, 132, 146, 170) and communicates with the outlet (48, 70, 132, 146, 170) via at least one opening arranged on the outlet (48, 70, 132, 146, 170).

9. The silencer (2, 62, 128, 142, 168) of claim 8, comprising a plurality of openings that are arranged on an inner circumference of the annular channel in such a way that a sound wave entering the annular channel through an opening can propagate and reach an adjacent opening, and wherein the sound wave that enters the annular channel from the outlet (48, 70, 132, 146, 170) via the adjacent opening has an opposite phase referred to the sound wave propagating in the annular channel and the phase and the opposite phase cancel one another out at the adjacent opening.

10. The silencer (2, 62, 128, 142, 168) of claim 8 or 9, wherein the annular channel communicates with the outlet (48, 70, 132, 146, 170) via 8 openings that are uniformly distributed over the outlet (48, 70, 132, 146, 170).

11. An aircraft (74) with at least one auxiliary power unit (76) and at least one silencer (2, 62, 128, 142, 168) of one of claims 1-10 for the auxiliary power unit (76).

**Revendications**

1. Silencieux (2, 62, 128, 142, 168) pour un groupe moteur auxiliaire d'un aéronef, présentant

    - une entrée (46, 68, 130, 144),
    - une sortie (48, 70, 132, 146, 170),
    - un carter (4, 64, 134, 150) et
    - un canal d'écoulement (6, 66, 136, 148) disposé dans le carter (4, 64, 134, 150),

    un espace intermédiaire étant formé entre le carter (4, 64, 134, 150) et le canal d'écoulement (6, 66, 136, 148), subdivisé par une ou plusieurs cloisons (8, 72) en cellules extérieures (10-26, 54, 76, 84, 85, 87, 100) disposées autour du canal d'écoulement (6, 66, 136, 148), le matériau de paroi du canal d'écoulement (6, 66, 136, 148) étant poreux et le canal d'écoulement (6, 66, 136, 148) étant dimensionné de telle sorte qu'au niveau de la paroi du canal d'écoulement (6, 66, 136, 148) les parts de vitesse radiales au moins d'un premier et d'un second mode transversal formé dans le silencieux présentent un maximum commun pour permettre la meilleure dissipation possible à travers le matériau de paroi.

**2.** Silencieux (2, 62, 128, 142, 168) selon la revendication 1, les cloisons (8, 72) étant disposées les unes par rapport aux autres de telle sorte qu'au moins deux groupes de cellules extérieures (10-26, 54, 76, 84, 85, 87, 100) sont formés dans l'espace intermédiaire entre le carter (4, 64, 134, 150) et le canal d'écoulement (6, 66, 136, 148), des cellules extérieures (10-26, 54, 76, 84, 85, 87, 100) d'un premier groupe présentant respectivement une longueur provenant d'un premier intervalle et des cellules extérieures (10-26, 54, 76, 84, 85, 87, 100) d'un second groupe présentant respectivement une longueur provenant d'un second intervalle, les premier et second intervalles étant adjacents et présentant respectivement une largeur qui correspond essentiellement à 0,1 fois le diamètre hydraulique du canal d'écoulement (6, 66, 136, 148), et que les cellules extérieures (10-26, 54, 76, 84, 85, 87, 100) présentent un volume, qui correspondent à 1,0 à 1,2 fois le volume de cellules intérieures (28-44, 52, 74) qui sont entourées des cellules extérieures (10-26, 54, 76, 84, 85, 87, 100) respectives et sont formées dans le canal d'écoulement (6, 66, 136, 148).

**3.** Silencieux (2, 62, 128, 142, 168) selon la revendication 1 ou 2, le silencieux (2, 62, 128, 142, 168) comprenant des cellules extérieures (10-26, 54, 76, 84, 85, 87, 100) supplémentaires pour l'amortissement de bruits à haute fréquence qui présentent un volume, qui correspondent à 0,75 à 0,85 fois le volume des cellules intérieures (28-44, 52, 74) qui sont entourées des cellules extérieures (10-26, 54, 76, 84, 85, 87, 100) respectives et sont formées dans le canal d'écoulement (6, 66, 136, 148).

**4.** Silencieux (2, 62, 128, 142, 168) selon la revendication 2, le premier groupe de cellules extérieures (10-26, 54, 76, 84, 100) présentant une longueur qui correspond à 0,3 à 0,4 fois le diamètre hydraulique (88) du canal d'écoulement (6, 66, 136, 148).

**5.** Silencieux (2, 62, 128, 142, 168) selon la revendication 2, le second groupe de cellules extérieures (10-26, 54, 76, 84, 100) présentant une longueur qui correspond à 0,4 à 0,5 fois le diamètre hydraulique (88) du canal d'écoulement (6, 66, 136, 148).

**6.** Silencieux (2, 62, 128, 142, 168) selon la revendication 2, 4 ou 5, un troisième groupe supplémentaire de cellules extérieures (10-26, 54, 76, 84, 100) présentant une longueur qui correspond à 0,2 à 0,3 fois le diamètre hydraulique (88) du canal d'écoulement (6, 66, 136, 148).

**7.** Silencieux (2, 62, 128, 142, 168) selon l'une des revendications précédentes, la section du canal d'écoulement (6, 66, 136, 148) et au moins d'une portion du carter (4, 64, 134, 150) entourant le canal d'écoulement (6, 66, 136, 148) passant en continu d'une première forme en une seconde forme, chaque point dans la section du canal d'écoulement (6, 66, 136, 148) présentant, dans la première forme, une distance par rapport à un point le plus proche de contour extérieur du carter (4, 64, 134, 150), qui correspond tout au plus à la moitié du diamètre hydraulique de la première forme et chaque point dans la section du canal d'écoulement (6, 66, 136, 148) présentant, dans la seconde forme, une distance par rapport au point le plus proche de contour extérieur du carter (4, 64, 134, 150), qui correspond tout au plus à un quart du diamètre hydraulique de la première forme.

**8.** Silencieux (2, 62, 128, 142, 168) selon l'une des revendications précédentes, présentant en outre un canal annulaire, monté sur une sortie prolongée (48, 70, 132, 146, 170), qui communique via au moins une ouverture disposée au niveau de la sortie (48, 70, 132, 146, 170) avec la sortie (48, 70, 132, 146, 170).

**9.** Silencieux (2, 62, 128, 142, 168) selon la revendication 8, présentant une multitude d'ouvertures, qui sont disposées au niveau d'une circonférence intérieure du canal annulaire de telle sorte qu'une onde sonore entrant à travers une ouverture dans le canal annulaire peut se propager et atteindre une ouverture adjacente, l'onde sonore entrant, depuis de la sortie (48, 70, 132, 146, 170), dans le canal annulaire via l'ouverture adjacente présentant une opposition de phase par rapport à l'onde sonore propagée dans le canal annulaire et la phase et l'opposition de phase s'équilibrant au niveau de l'ouverture adjacente.

**10.** Silencieux (2, 62, 128, 142, 168) selon la revendication 8 ou 9, dans lequel le canal annulaire communique via au moins 8 ouvertures réparties régulièrement sur la sortie (48, 70, 132, 146, 170) avec la sortie (48, 70, 132, 146, 170).

**11.** Aéronef (74) avec au moins un groupe moteur auxiliaire (76) et au moins un silencieux (2, 62, 128, 142, 168) selon l'une des revendications 1 à 10 pour le groupe moteur auxiliaire (76).

Fig. 1

Fig. 2a

Fig. 2b

Fig. 3

Fig. 4

Fig. 5a

Fig. 5b

Fig. 5c

Fig. 6a

Fig. 6b

Fig. 7a

Fig. 7b

Fig. 8a

Fig. 8b

Fig. 9

Fig. 10

Fig. 11

Fig. 12a

Fig. 12b

Fig. 12c

Fig. 12d

Fig. 12e

172

190

192

204

194

202

196

200

198

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008051241
- US 61195835 B
- DE 102009006579
- US 61148328 B
- US 2006043236 A1
- US 2008078863 A1
- US 2006180388 A1
- US 2002104707 A1
- EP 1398473 B1
- US 6772857 B2